(19) Europäisches Patentamt
European Patent Office
Office européen des brevets

(11) **EP 4 192 105 A1**

# EUROPEAN PATENT APPLICATION
published in accordance with Art. 153(4) EPC

(43) Date of publication:
**07.06.2023 Bulletin 2023/23**

(21) Application number: **21860087.2**

(22) Date of filing: **04.08.2021**

(51) International Patent Classification (IPC):
***H04W 36/00*** *(2009.01)*

(52) Cooperative Patent Classification (CPC):
**H04W 36/00; H04W 52/14; H04W 72/04;
H04W 74/08**

(86) International application number:
**PCT/CN2021/110645**

(87) International publication number:
**WO 2022/042247 (03.03.2022 Gazette 2022/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.08.2020 CN 202010889550**

(71) Applicant: **Huawei Technologies Co., Ltd.
Shenzhen, Guangdong 518129 (CN)**

(72) Inventors:
 • **CHEN, Yan
 Shenzhen, Guangdong 518129 (CN)**
 • **PENG, Bingguang
 Shenzhen, Guangdong 518129 (CN)**
 • **GUO, Ao
 Shenzhen, Guangdong 518129 (CN)**

 • **YANG, Jianhua
 Shenzhen, Guangdong 518129 (CN)**
 • **ZHAO, Zhilin
 Shenzhen, Guangdong 518129 (CN)**
 • **DING, Rentian
 Shenzhen, Guangdong 518129 (CN)**
 • **YAN, Chaoyi
 Shenzhen, Guangdong 518129 (CN)**
 • **DAI, Xitao
 Shenzhen, Guangdong 518129 (CN)**
 • **YANG, Shengbo
 Shenzhen, Guangdong 518129 (CN)**
 • **WANG, Zhou
 Shenzhen, Guangdong 518129 (CN)**

(74) Representative: **Pfenning, Meinig & Partner mbB
Patent- und Rechtsanwälte
Theresienhöhe 11a
80339 München (DE)**

(54) **WAVEFORM INDICATION METHOD, CHIP, AND SYSTEM**

(57) A waveform indication method, a chip, and a system are provided, and relate to the field of communications technologies. In one aspect, after completing random access, a terminal may report MPR information to a network device when reporting capability information. A waveform that is to be used for a PUSCH, that is indicated by the network device, and that is obtained in a random access process is specified in a communications protocol. The network device can determine, based on the MPR information and a part of the capability informa- tion, whether to indicate the terminal to perform waveform switching. For example, the network device may indicate, by using a downlink control message, switching of a BWP to further switch to the waveform to be used for the PUSCH. In another aspect, after completing random access, a terminal may indicate an expected waveform of a PUSCH of the terminal by sending a waveform assist- ance message to a network device. In this way, the net- work device indicates the terminal to use to a waveform (the expected waveform) for the PUSCH.

FIG. 8

Description

CROSS-REFERENCE TO RELATED APPLICATIONS

This application claims priority to Chinese Patent Application No. 202010889550.9, filed with the China National Intellectual Property Administration on August 28, 2020 and entitled "WAVEFORM INDICATION METHOD, CHIP, AND SYSTEM", which is incorporated herein by reference in its entirety.

TECHNICAL FIELD

Embodiments of this application relate to the field of communications technologies, and in particular, to a waveform indication method, a chip, and a system.

BACKGROUND

In a long term evolution (long term evolution, LTE) system, only a discrete Fourier transform-spread-orthogonal frequency division multiplexing (discrete Fourier transform-spread-orthogonal frequency division multiplexing, DFT-s-OFDM) waveform is supported during uplink information transmission. In a new radio (new radio, NR) system, a cyclic prefix orthogonal frequency division multiplexing (cyclic prefix orthogonal frequency division multiplexing, CP-OFDM) waveform is introduced. In other words, the NR system supports uplink information transmission using a DFT-s-OFDM waveform or a CP-OFDM waveform.

In the NR system, in current wireless communication, a terminal and a base station determine, in an initial random access (random access, RA) process, a waveform to be used for a physical uplink shared channel (physical uplink shared channel, PUSCH). Currently, there is no feasible solution to implementing waveform switching after the CP-OFDM waveform is introduced to the NR system and the random access process is completed.

SUMMARY

Embodiments of this application provide a waveform indication method, a chip, and a system, to provide a feasible manner for waveform switching performed after a random access process is completed, so as to help increase uplink transmit power of a terminal.

According to a first aspect, an embodiment of this application provides a communications system, specifically including a network device and a terminal. The network device is configured to send a first message to the terminal in a random access process. The first message is used to indicate to use a first waveform for a physical uplink shared channel (PUSCH) of the terminal. After receiving the first message, the terminal sends a third message to the network device when a preset condition is met. The third message includes maximum transmit power reduction (MPR) information of the terminal and capability information of the terminal. The network device is further configured to: receive the second message, and send a second message to the terminal. The second message is used to indicate to use a second waveform for a PUSCH of the terminal, and the second waveform is determined based on the MPR information of the terminal and/or a part of capabilities indicated by the capability information of the terminal. Uplink transmit power used when the terminal sends uplink information by using the second waveform is greater than uplink transmit power used when the terminal sends uplink information by using the first waveform.

In this embodiment of this application, because the network device configures the waveform of the PUSCH for the terminal in the random access procedure, the waveform of the PUSCH configured in the random access procedure is specified in a communications protocol. However, in an NR system, two waveforms are supported. According to the solution provided in this embodiment of this application, when reporting capability information, the terminal reports MPR information to the network device. In this way, the network device may determine, for the terminal based on the MPR information and a part of the capability information of the terminal, whether waveform switching can bring an uplink transmit power gain of the terminal, to indicate a waveform to which the terminal switches, so that the terminal sends uplink information by using the waveform to which the terminal switches. This can improve uplink transmit power for sending the uplink information, help improve uplink transmit performance, and improve user experience.

In a possible implementation of the first aspect, the second message is a downlink control message, the downlink control message indicates that a first bandwidth part (BWP) is used for the PUSCH, and a correspondence between the first BWP and the second waveform exists. Further, when receiving the downlink control message, the terminal can determine, based on the correspondence between the first BWP and the second waveform, the second waveform corresponding to the first BWP, and send the uplink information to the network device by using the second waveform. Because a delay of the downlink control message is relatively short, and signaling overheads are relatively low, using the downlink control message to indicate the waveform of the PUSCH can reduce signaling overheads and reduce a delay.

In another possible implementation of the first aspect, the terminal is further configured to receive configuration information sent by the network device. The configuration information is used to configure a correspondence between a waveform supported by a PUSCH of the terminal and a BWP, different waveforms correspond to different BWPs, and the configuration information includes the correspondence between the first BWP and the second waveform. Further, after receiving the first BWP indicated by the downlink control message, the terminal device may determine, based on the configuration information, the second waveform corresponding to the first BWP, so that the terminal sends the uplink information by using the second waveform.

In still another possible implementation of the first aspect, the second message is a radio resource control (RRC) connection reconfiguration message. The first message may be a message msg2 in the random access process.

In yet another possible implementation of the first aspect, that a preset condition is met includes: the terminal receives a capability enquiry request from the network device, where the capability enquiry request is used to request to enquire a capability of the terminal; or a trigger condition for triggering sending of a capability information message of the terminal to the network device is met. For example, the terminal may send the capability information message to the network device when receiving the capability enquiry request from the network device. For another example, the terminal may send the capability information message to the network device when the trigger condition for triggering sending of the capability information message of the terminal to the network device is met, for example, when the terminal determines that the random access process is completed or the terminal is attaching to a network, but does not receive the capability enquiry request from the network device.

In still yet another possible implementation of the first aspect, the MPR information includes a correspondence between different modulation schemes, different resource block (RB) locations, two waveforms supported by a PUSCH of the terminal, and different MPR values; or the MPR information includes a plurality of difference values, the difference value is a difference between MPR values that correspond to two waveforms supported by a PUSCH of the terminal and that are in a same modulation scheme at a same RB location, and different difference values correspond to different modulation schemes or RB locations; or the MPR information includes a difference between MPR values that correspond to two waveforms supported by a PUSCH of the terminal and that are at an inner RB location; or the MPR information includes a difference between MPR values that correspond to two waveforms supported by a PUSCH of the terminal and that are in a QPSK modulation scheme.

In a further possible implementation of the first aspect, the third message is the capability information (UE Capability Information) message of the terminal. The third message may alternatively be another protocol message.

According to a second aspect, an embodiment of this application provides a communications system, specifically including: a network device, configured to send a first message to a terminal in a random access process, where the first message is used to indicate to use a first waveform for a physical uplink shared channel (PUSCH) of the terminal; and the terminal, configured to send a waveform assistance message to the network device, where the waveform assistance message indicates that a second waveform is expected to be used for a PUSCH of the terminal. The network device is further configured to: receive the waveform assistance message from the network device, and send a second message to the terminal, where the second message is used to indicate to use the second waveform for the PUSCH. The terminal is further configured to: receive the second message from the network device, and send uplink information to the network device by using the second waveform indicated by the second message.

In this embodiment of this application, because the network device configures the waveform of the PUSCH for the terminal in the random access procedure, the waveform of the PUSCH configured in the random access procedure is specified in a communications protocol. However, in an NR system, two waveforms are supported. According to the solution provided in this embodiment of this application, when determining a waveform expected to be used, the terminal reports the waveform expected to be used to the network device, so that the network device indicates the terminal to perform waveform switching, and the terminal sends uplink information by using a waveform obtained after the waveform switching. This provides a manner in which the terminal participates in waveform switching. When a distance range between the terminal and the network device changes, a path loss is relatively large, or an amount of to-be-sent data on the terminal increases, the terminal may be triggered to determine gains of transmit power of a waveform used for a current PUSCH and transmit power of another supported waveform, to determine whether to switch the waveform used for the current PUSCH. When determining that the waveform used for the current PUSCH needs to be switched, the terminal sends, to the network device, a waveform expected to be used for a PUSCH. In this way, uplink transmit power for sending the uplink information can be increased, uplink transmit performance can be improved, and user experience can be improved.

In a possible implementation of the second aspect, the second message is a downlink control message, the downlink control message indicates that a first bandwidth part (BWP) is used for the PUSCH, and a correspondence between the first BWP and the second waveform exists. Further, when receiving the downlink control message, the terminal can determine, based on the correspondence between the first BWP and the second waveform, the second waveform corresponding to the first BWP, and send the uplink information to the network device by using the second waveform. Because a delay of the downlink control message is relatively short, and signaling overheads are relatively low, using the downlink control message to indicate the waveform of the PUSCH can reduce signaling overheads and reduce a delay.

In another possible implementation of the second aspect, the terminal is further configured to receive configuration information from the network device. The configuration information is used to configure a correspondence between a waveform supported by a PUSCH of the terminal and a BWP, different waveforms correspond to different BWPs, and the configuration information includes the correspondence between the first BWP and the second waveform.

In another possible implementation of the second aspect, the second message is a radio resource control (RRC) connection reconfiguration message. The first message may be a message msg2 in the random access process.

According to a third aspect, based on an inventive concept the same as that of the first aspect, an embodiment of this application provides a waveform indication method. For beneficial effects of the method, refer to related descriptions of the first aspect. Details are not described herein again. The waveform indication method specifically includes: A terminal receives a first message from a network device. The first message is used to indicate to use a first waveform for a physical uplink shared channel (PUSCH) of the terminal. Then, the terminal sends a third message to the network device when a preset condition is met. The third message includes maximum transmit power reduction (MPR) information of the terminal and capability information of the terminal. Further, the terminal receives a second message from the network device. The second message is used to indicate to use a second waveform for a PUSCH of the terminal, and the second waveform is determined, based on the MPR information and a part of capabilities indicated by the capability information of the terminal, from a waveform supported by the physical uplink shared channel (PUSCH) of the terminal. The terminal sends uplink information to the network device by using the second waveform. Uplink transmit power used when the terminal sends the uplink information by using the second waveform is greater than uplink transmit power used when the terminal sends the uplink information by using the first waveform.

In a possible implementation of the third aspect, the first message is a downlink control message, the downlink control message indicates that a first bandwidth part (BWP) is used for the PUSCH, and a correspondence between the first BWP and the second waveform exists.

In another possible implementation of the third aspect, the method further includes: The terminal receives configuration information sent by the network device. The configuration information is used to configure a correspondence between a waveform supported by a PUSCH of the terminal and a BWP, different waveforms correspond to different BWPs, and the configuration information includes the correspondence between the first BWP and the second waveform.

In still another possible implementation of the third aspect, the MPR information includes a correspondence between different modulation schemes, different resource block (RB) locations, two waveforms supported by a PUSCH of the terminal, and different MPR values; or the MPR information includes a plurality of difference values, the difference value is a difference between MPR values that correspond to two waveforms supported by a PUSCH of the terminal and that are in a same modulation scheme at a same RB location, and different difference values correspond to different modulation schemes or RB locations; or the MPR information includes a difference between MPR values that correspond to two waveforms supported by a PUSCH of the terminal and that are at an inner RB location; or the MPR information includes a difference between MPR values that correspond to two waveforms supported by a PUSCH of the terminal and that are in a QPSK modulation scheme.

In yet another possible implementation of the third aspect, the two waveforms supported by the PUSCH of the terminal include a cyclic prefix orthogonal frequency division multiplexing (CP-OFDM) waveform and a discrete Fourier transform-spread-orthogonal frequency division multiplexing (DFT-s-OFDM) waveform.

In still yet another possible implementation of the third aspect, that a preset condition is met includes: the terminal receives a capability enquiry request from the network device, where the capability enquiry request is used to request to enquire a capability of the terminal; or a trigger condition for triggering sending of a capability information message of the terminal to the network device is met.

In a further possible implementation of the third aspect, the second waveform is a DFT-s-OFDM waveform, and the method further includes: The terminal receives a first parameter from the network device, where the first parameter includes one or more of a sounding reference signal (SRS) resource, an SRS port, or a maximum antenna rank.

In still another possible implementation of the third aspect, the third message is the capability information (UE Capability Information) message of the terminal. The third message may alternatively be another protocol message.

According to a fourth aspect, based on an inventive concept the same as that of the second aspect, an embodiment of this application provides a waveform indication method. For beneficial effects of the method, refer to related descriptions of the second aspect. Details are not described herein again. The waveform indication method specifically includes: A terminal receives a first message from a network device. The first message is used to indicate to use a first waveform for a physical uplink shared channel (PUSCH) of the terminal. The terminal sends a waveform assistance message to the network device. The waveform assistance message is used to indicate that a second waveform is expected to be used for a physical uplink shared channel (PUSCH) of the terminal. The terminal receives a second message from the network device. The second message is used to indicate to use the second waveform for a PUSCH of the terminal. The terminal sends uplink information to the network device by using the second waveform. Uplink transmit power used when the terminal sends the uplink information by using the second waveform is greater than uplink transmit power used when the terminal sends the uplink information by using the first waveform.

In a possible implementation of the fourth aspect, the second message is a downlink control message, the downlink message indicates that a first bandwidth part (BWP) is used for the PUSCH, and a correspondence between the first BWP and the second waveform exists.

In another possible implementation of the fourth aspect, the method further includes: The terminal receives configuration information sent by the network device. The configuration information is used to configure a correspondence between a waveform supported by a PUSCH of the terminal and a BWP, different waveforms correspond to different BWPs, and the configuration information includes the correspondence between the first BWP and the second waveform.

In still another possible implementation of the fourth aspect, the waveform supported by the PUSCH includes a cyclic prefix orthogonal frequency division multiplexing (CP-OFDM) waveform or a discrete Fourier transform-spread-orthogonal frequency division multiplexing (DFT-s-OFDM) waveform.

In yet another possible implementation of the fourth aspect, the second waveform is a DFT-s-OFDM waveform, and the method further includes: The terminal receives a first parameter from the network device, where the first parameter includes one or more of a sounding reference signal (SRS) resource, an SRS port, or a maximum antenna rank.

According to a fifth aspect, based on an inventive concept the same as that of the first aspect, an embodiment of this application provides a waveform indication method. For beneficial effects, refer to related descriptions of the first aspect. Details are not described herein again. The waveform indication manner includes: A network device is configured to send a first message to a terminal in a random access process. The first message is used to indicate to use a first waveform for a physical uplink shared channel (PUSCH) of the terminal. The network device receives a third message from the terminal. The third message includes maximum transmit power reduction (MPR) information of the terminal and capability information of the terminal. The network device sends a first message to the terminal. The first message is used to indicate that a waveform to be used for a PUSCH of the terminal is a second waveform, and the second waveform is determined based on the MPR information and/or a part of capabilities indicated by the capability information of the terminal.

In a possible implementation of the fifth aspect, the first message is a downlink control message, the downlink control message indicates that a first bandwidth part (BWP) is used for the PUSCH, and a correspondence between the first BWP and the second waveform exists.

In another possible implementation of the fifth aspect, the method further includes:

The network device sends configuration information to the terminal, wherein the configuration information is used to configure a correspondence between a waveform supported by a PUSCH of the terminal and a BWP, different waveforms correspond to different BWPs, and the configuration information includes the correspondence between the first BWP and the second waveform.

In still another possible implementation of the fifth aspect, the waveform supported by the PUSCH includes a cyclic prefix orthogonal frequency division multiplexing (CP-OFDM) waveform or a discrete Fourier transform-spread-orthogonal frequency division multiplexing (DFT-s-OFDM) waveform.

In yet another possible implementation of the fifth aspect, the second waveform is a DFT-s-OFDM waveform, and the method further includes:

The network device sends a first parameter to the terminal. The first parameter includes one or more of a sounding reference signal (SRS) resource, an SRS port, or a maximum antenna rank.

In another possible implementation of the fifth aspect, the second message is a radio resource control (RRC) connection reconfiguration message. The first message may be a message msg2 in the random access process.

In still another possible implementation of the fifth aspect, the third message is the capability information (UE Capability Information) message of the terminal. The third message may alternatively be another protocol message.

According to a sixth aspect, based on an inventive concept the same as that of the second aspect, an embodiment of this application provides a waveform indication method. For beneficial effects, refer to related descriptions of the second aspect. Details are not described herein again. The waveform indication method specifically includes: A network device sends a first message to a terminal in a random access process. The first message is used to indicate to use a first waveform for a physical uplink shared channel (PUSCH) of the terminal. The network device receives a waveform assistance message from the terminal. The waveform assistance message indicates that a second waveform is expected to be used for a PUSCH of the terminal. The network device sends a second message to the terminal. The second message is used to indicate to use the second waveform for the PUSCH.

In a possible implementation of the sixth aspect, the second message is a downlink control message, the downlink control message indicates that a first bandwidth part (BWP) is used for the PUSCH, and a correspondence between the first BWP and the second waveform exists.

In another possible implementation of the sixth aspect, the method further includes: The network device sends configuration information to the terminal. The configuration information is used to configure a correspondence between a waveform supported by a PUSCH of the terminal and a BWP, different waveforms correspond to different BWPs, and the configuration information includes the correspondence between the first BWP and the second waveform.

In still another possible implementation of the sixth aspect, the waveform supported by the PUSCH includes a cyclic prefix orthogonal frequency division multiplexing (CP-OFDM) waveform or a discrete Fourier transform-spread-orthogonal frequency division multiplexing (DFT-s-OFDM) waveform.

In yet another possible implementation of the sixth aspect, the second message is a radio resource control (RRC) connection reconfiguration message. The first message may be a message msg2 in the random access process.

In still yet another possible implementation of the sixth aspect, the second waveform is a DFT-s-OFDM waveform, and the method further includes: The network device sends a first parameter to the terminal. The first parameter includes one or more of a sounding reference signal (SRS) resource, an SRS port, or a maximum antenna rank.

According to a seventh aspect, an embodiment of this application provides a chip, and the chip includes a processor and a communications interface. The chip may be applied to a terminal. The communications interface is configured to receive a first message from a network device. The first message is used to indicate to use a first waveform for a physical uplink shared channel (PUSCH) of the terminal. The processor is configured to: when determining that a preset condition is met, control the communications interface to send a third message to the network device. The third message includes maximum transmit power reduction (MPR) information of the terminal and capability information of the terminal. The communications interface is further configured to receive a second message from the network device. The second message is used to indicate to use a second waveform for a PUSCH of the terminal, and the second waveform is determined, based on the MPR information and a part of capabilities indicated by the capability information of the terminal, from a waveform supported by the physical uplink shared channel (PUSCH) of the terminal. The processor is further configured to control the communications interface to send uplink information to the network device by using the second waveform.

In a possible implementation of the seventh aspect, the first message is a downlink control message, the downlink control message indicates that a first bandwidth part (BWP) is used for the PUSCH, and a correspondence between the first BWP and the second waveform exists.

In another possible implementation of the seventh aspect, the communications interface is further configured to receive configuration information sent by the network device. The configuration information is used to configure a correspondence between a waveform supported by a PUSCH of the terminal and a BWP, different waveforms correspond to different BWPs, and the configuration information includes the correspondence between the first BWP and the second waveform.

In still another possible implementation of the seventh aspect, the MPR information includes a correspondence between different modulation schemes, different resource block (RB) locations, two waveforms supported by a PUSCH of the terminal, and different MPR values; or the MPR information includes a plurality of difference values, the difference value is a difference between MPR values that correspond to two waveforms supported by a PUSCH of the terminal and that are in a same modulation scheme at a same RB location, and different difference values correspond to different modulation schemes or RB locations; or the MPR information includes a difference between MPR values that correspond to two waveforms supported by a PUSCH of the terminal and that are at an inner RB location; or the MPR information includes a difference between MPR values that correspond to two waveforms supported by a PUSCH of the terminal and that are in a QPSK modulation scheme.

In yet another possible implementation of the seventh aspect, the two waveforms supported by the PUSCH of the terminal include a cyclic prefix orthogonal frequency division multiplexing (CP-OFDM) waveform and a discrete Fourier transform-spread-orthogonal frequency division multiplexing (DFT-s-OFDM) waveform.

In still yet another possible implementation of the seventh aspect, that a preset condition is met includes: the communications interface receives a capability enquiry request from the network device, where the capability enquiry request is used to request to enquire a capability of the terminal; or the processor determines that a trigger condition for triggering sending of a capability information message of the terminal to the network device is met.

In a further possible implementation of the seventh aspect, the second waveform is a DFT-s-OFDM waveform. The communications interface is further configured to receive a first parameter from the network device, where the first parameter includes one or more of a sounding reference signal (SRS) resource, an SRS port, or a maximum antenna rank.

In still another possible implementation of the first aspect, the third message is the capability information (UE Capability Information) message of the terminal. The third message may alternatively be another protocol message.

According to an eighth aspect, an embodiment of this application provides a chip, and the chip includes a processor and a communications interface. The chip may be applied to a terminal. The communications interface is configured to receive a first message from a network device. The first message is used to indicate to use a first waveform for a physical uplink shared channel (PUSCH) of the terminal. The processor is configured to control the communications interface to send a waveform assistance message to the network device. The waveform assistance message is used to indicate that a second waveform is expected to be used for a physical uplink shared channel (PUSCH) of the terminal. The communications interface is further configured to receive a second message from the network device. The second message is used to indicate to use the second waveform for a PUSCH of the terminal. The processor is further configured to control the communications interface to send uplink information to the network device by using the second waveform.

In a possible implementation of the eighth aspect, the second message is a downlink control message, the downlink message indicates that a first bandwidth part (BWP) is used for the PUSCH, and a correspondence between the first BWP and the second waveform exists.

In another possible implementation of the eighth aspect, the communications interface is further configured to receive configuration information sent by the network device. The configuration information is used to configure a correspondence between a waveform supported by a PUSCH of the terminal and a BWP, different waveforms correspond to different BWPs, and the configuration information includes the correspondence between the first BWP and the second waveform.

In still another possible implementation of the eighth aspect, the waveform supported by the PUSCH includes a cyclic prefix orthogonal frequency division multiplexing (CP-OFDM) waveform or a discrete Fourier transform-spread-orthogonal frequency division multiplexing (DFT-s-OFDM) waveform.

In yet another possible implementation of the eighth aspect, the second waveform is a DFT-s-OFDM waveform. The communications interface is further configured to receive a first parameter from the network device, where the first parameter includes one or more of a sounding reference signal (SRS) resource, an SRS port, or a maximum antenna rank.

According to a ninth aspect, an embodiment of this application provides a chip, and the chip includes a processor and a communications interface. The chip may be applied to a network device. The processor is configured to control the communications interface to send a first message to a terminal in a random access process. The first message is used to indicate to use a first waveform for a physical uplink shared channel (PUSCH) of the terminal. The communications interface is further configured to receive a third message from the terminal. The third message includes maximum transmit power reduction (MPR) information of the terminal and capability information of the terminal. The processor is further configured to control the communications interface to send a first message to the terminal. The first message is used to indicate that a waveform to be used for a PUSCH of the terminal is a second waveform, and the second waveform is determined based on the MPR information and/or a part of capabilities indicated by the capability information of the terminal.

In a possible implementation of the ninth aspect, the first message is a downlink control message, the downlink control message indicates that a first bandwidth part (BWP) is used for the PUSCH, and a correspondence between the first BWP and the second waveform exists.

In another possible implementation of the ninth aspect, the communications interface is further configured to send configuration information to the terminal. The configuration information is used to configure a correspondence between a waveform supported by a PUSCH of the terminal and a BWP, different waveforms correspond to different BWPs, and the configuration information includes the correspondence between the first BWP and the second waveform.

In still another possible implementation of the ninth aspect, the waveform supported by the PUSCH includes a cyclic prefix orthogonal frequency division multiplexing (CP-OFDM) waveform or a discrete Fourier transform-spread-orthogonal frequency division multiplexing (DFT-s-OFDM) waveform.

In yet another possible implementation of the ninth aspect, the second waveform is a DFT-s-OFDM waveform. The communications interface is further configured to send a first parameter to the terminal, where the first parameter includes one or more of a sounding reference signal (SRS) resource, an SRS port, or a maximum antenna rank.

In another possible implementation of the ninth aspect, the second message is a radio resource control (RRC) connection reconfiguration message. The first message may be a message msg2 in the random access process.

In still another possible implementation of the first aspect, the third message is a capability information (UE Capability Information) message of the terminal. The third message may alternatively be another protocol message.

According to a tenth aspect, an embodiment of this application provides a chip, and the chip includes a processor and a communications interface. The chip may be applied to a network device. The processor is configured to control the communications interface to send a first message to a terminal in a random access process. The first message is used to indicate to use a first waveform for a physical uplink shared channel (PUSCH) of the terminal. The communications interface is further configured to receive a waveform assistance message from the terminal. The waveform assistance message indicates that a second waveform is expected to be used for a PUSCH of the terminal. The processor is further configured to control the communications interface to send a second message to the terminal. The second message is used to indicate to use the second waveform for the PUSCH.

In a possible implementation of the tenth aspect, the second message is a downlink control message, the downlink control message indicates that a first bandwidth part (BWP) is used for the PUSCH, and a correspondence between the first BWP and the second waveform exists.

In another possible implementation of the tenth aspect, the processor is further configured to control the communications interface to send configuration information to the terminal. The configuration information is used to configure a correspondence between a waveform supported by a PUSCH of the terminal and a BWP, different waveforms correspond to different BWPs, and the configuration information includes the correspondence between the first BWP and the second waveform.

In still another possible implementation of the tenth aspect, the waveform supported by the PUSCH includes a cyclic prefix orthogonal frequency division multiplexing (CP-OFDM) waveform or a discrete Fourier transform-spread-orthogonal frequency division multiplexing (DFT-s-OFDM) waveform.

In yet another possible implementation of the tenth aspect, the second message is a radio resource control (RRC) connection reconfiguration message. The first message may be a message msg2 in the random access process.

In still yet another possible implementation of the tenth aspect, the second waveform is a DFT-s-OFDM waveform. The processor is further configured to send a first parameter to the terminal through the communications interface, where the first parameter includes one or more of a sounding reference signal (SRS) resource, an SRS port, or a maximum antenna rank.

According to an eleventh aspect, based on an inventive concept the same as that of the first aspect, an embodiment of this application provides a terminal. The terminal includes a receiving module and a sending module. The receiving module is configured to receive a first message from a network device. The first message is used to indicate to use a first waveform for a physical uplink shared channel (PUSCH) of the terminal. Then, the sending module sends a capability information message of the terminal to the network device when a preset condition is met. The capability information message of the terminal includes maximum transmit power reduction (MPR) information of the terminal and capability information of the terminal. Further, the receiving module receives a second message from the network device. The second message is used to indicate to use a second waveform for a PUSCH of the terminal, and the second waveform is determined, based on the MPR information and a part of capabilities indicated by the capability information of the terminal, from a waveform supported by the physical uplink shared channel PUSCH of the terminal. The sending module sends uplink information to the network device by using the second waveform. Uplink transmit power used when the terminal sends the uplink information by using the second waveform is greater than uplink transmit power used when the terminal sends the uplink information by using the first waveform.

In a possible implementation of the eleventh aspect, the first message is a downlink control message, the downlink control message indicates that a first bandwidth part (BWP) is used for the PUSCH, and a correspondence between the first BWP and the second waveform exists.

In another possible implementation of the eleventh aspect, the receiving module is further configured to receive configuration information sent by the network device. The configuration information is used to configure a correspondence between a waveform supported by a PUSCH of the terminal and a BWP, different waveforms correspond to different BWPs, and the configuration information includes the correspondence between the first BWP and the second waveform.

In still another possible implementation of the eleventh aspect, the MPR information includes a correspondence between different modulation schemes, different resource block RB locations, two waveforms supported by a PUSCH of the terminal, and different MPR values; or the MPR information includes a plurality of difference values, the difference value is a difference between MPR values that correspond to two waveforms supported by a PUSCH of the terminal and that are in a same modulation scheme at a same RB location, and different difference values correspond to different modulation schemes or RB locations; or the MPR information includes a difference between MPR values that correspond to two waveforms supported by a PUSCH of the terminal and that are at an inner RB location; or the MPR information includes a difference between MPR values that correspond to two waveforms supported by a PUSCH of the terminal and that are in a QPSK modulation scheme.

In yet another possible implementation of the eleventh aspect, the two waveforms supported by the PUSCH of the terminal include a cyclic prefix orthogonal frequency division multiplexing (CP-OFDM) waveform and a discrete Fourier transform-spread-orthogonal frequency division multiplexing (DFT-s-OFDM) waveform.

In still yet another possible implementation of the eleventh aspect, that a preset condition is met includes: the receiving module receives a capability enquiry request from the network device, where the capability enquiry request is used to request to enquire a capability of the terminal; or a trigger condition for triggering sending of the capability information message of the terminal to the network device is met.

In a further possible implementation of the eleventh aspect, the second waveform is a DFT-s-OFDM waveform. The receiving module is further configured to receive a first parameter from the network device, where the first parameter includes one or more of a sounding reference signal (SRS) resource, an SRS port, or a maximum antenna rank.

According to a twelfth aspect, based on an inventive concept the same as that of the second aspect, an embodiment of this application provides a terminal. The terminal includes a receiving module and a sending module. The receiving module is configured to receive a first message from a network device. The first message is used to indicate to use a first waveform for a physical uplink shared channel (PUSCH) of the terminal. The sending module sends a waveform assistance message to the network device. The waveform assistance message is used to indicate that a second waveform is expected to be used for a physical uplink shared channel (PUSCH) of the terminal. The receiving module is further configured to receive a second message from the network device. The second message is used to indicate to use the second waveform for a PUSCH of the terminal. The sending module is further configured to send uplink information to the network device by using the second waveform. Uplink transmit power used when the terminal sends the uplink information by using the second waveform is greater than uplink transmit power used when the terminal sends the uplink information by using the first waveform.

In a possible implementation of the twelfth aspect, the second message is a downlink control message, the downlink message indicates that a first bandwidth part (BWP) is used for the PUSCH, and a correspondence between the first BWP and the second waveform exists.

In another possible implementation of the twelfth aspect, the receiving module is further configured to receive configuration information sent by the network device. The configuration information is used to configure a correspondence between a waveform supported by a PUSCH of the terminal and a BWP, different waveforms correspond to different BWPs, and the configuration information includes the correspondence between the first BWP and the second waveform.

In still another possible implementation of the twelfth aspect, the waveform supported by the PUSCH includes a cyclic prefix orthogonal frequency division multiplexing (CP-OFDM) waveform or a discrete Fourier transform-spread-orthogonal frequency division multiplexing (DFT-s-OFDM) waveform.

In yet another possible implementation of the twelfth aspect, the second waveform is a DFT-s-OFDM waveform, and the method further includes: The terminal receives a first parameter from the network device, where the first parameter includes one or more of a sounding reference signal (SRS) resource, an SRS port, or a maximum antenna rank.

According to a thirteenth aspect, based on an inventive concept the same as that of the first aspect, an embodiment of this application provides a network device. The network device includes a sending module and a receiving module. The sending module is configured to send a first message to a terminal in a random access process. The first message is used to indicate to use a first waveform for a physical uplink shared channel (PUSCH) of the terminal. The receiving module is configured to receive a third message from the terminal. The third message includes maximum transmit power reduction (MPR) information of the terminal and capability information of the terminal. The sending module is further configured to send a first message to the terminal. The first message is used to indicate that a waveform to be used for a PUSCH of the terminal is a second waveform, and the second waveform is determined based on the MPR information and/or a part of capabilities indicated by the capability information of the terminal.

In a possible implementation of the thirteenth aspect, the first message is a downlink control message, the downlink control message indicates that a first bandwidth part (BWP) is used for the PUSCH, and a correspondence between the first BWP and the second waveform exists.

In another possible implementation of the thirteenth aspect, the sending module is further configured to send configuration information to the terminal. The configuration information is used to configure a correspondence between a waveform supported by a PUSCH of the terminal and a BWP, different waveforms correspond to different BWPs, and the configuration information includes the correspondence between the first BWP and the second waveform.

In still another possible implementation of the thirteenth aspect, the waveform supported by the PUSCH includes a cyclic prefix orthogonal frequency division multiplexing (CP-OFDM) waveform or a discrete Fourier transform-spread-orthogonal frequency division multiplexing (DFT-s-OFDM) waveform.

In yet another possible implementation of the thirteenth aspect, the second waveform is a DFT-s-OFDM waveform. The sending module is further configured to send a first parameter to the terminal, where the first parameter includes one or more of a sounding reference signal (SRS) resource, an SRS port, or a maximum antenna rank.

In another possible implementation of the thirteenth aspect, the second message is a radio resource control (RRC) connection reconfiguration message. The first message may be a message msg2 in the random access process.

In still another possible implementation of the thirteenth aspect, the third message is a capability information (UE Capability Information) message of the terminal. The third message may alternatively be another protocol message.

According to a fourteenth aspect, an embodiment of this application provides a network device. The network device includes a sending module and a receiving module. The sending module is configured to send a first message to a terminal in a random access process. The first message is used to indicate to use a first waveform for a physical uplink shared channel (PUSCH) of the terminal. The receiving module is configured to receive a waveform assistance message from the terminal. The waveform assistance message indicates that a second waveform is expected to be used for a PUSCH of the terminal. The sending module is further configured to send a second message to the terminal. The second message is used to indicate to use the second waveform for the PUSCH.

In a possible implementation of the fourteenth aspect, the second message is a downlink control message, the downlink control message indicates that a first bandwidth part (BWP) is used for the PUSCH, and a correspondence between the first BWP and the second waveform exists.

In another possible implementation of the fourteenth aspect, the sending module is further configured to send configuration information to the terminal. The configuration information is used to configure a correspondence between a waveform supported by a PUSCH of the terminal and a BWP, different waveforms correspond to different BWPs, and the configuration information includes the correspondence between the first BWP and the second waveform.

In still another possible implementation of the fourteenth aspect, the waveform supported by the PUSCH includes a cyclic prefix orthogonal frequency division multiplexing (CP-OFDM) waveform or a discrete Fourier transform-spread-orthogonal frequency division multiplexing (DFT-s-OFDM) waveform.

In yet another possible implementation of the fourteenth aspect, the second message is a radio resource control (RRC) connection reconfiguration message. The first message may be a message msg2 in the random access process.

In still yet another possible implementation of the fourteenth aspect, the second waveform is a DFT-s-OFDM waveform. The sending module is further configured to send a first parameter to the terminal, where the first parameter includes one or more of a sounding reference signal (SRS) resource, an SRS port, or a maximum antenna rank.

According to a fifteenth aspect, an embodiment of this application provides a computer-readable storage medium, storing a computer program. When the computer program is executed on a computer, the computer is enabled to perform the method according to any one of the third aspect or the possible implementations of the third aspect, or perform the method according to any one of the fourth aspect or the possible implementations of the fourth aspect, or perform the method according to any one of the fifth aspect or the possible implementations of the fifth aspect, or perform the method according to any one of the sixth aspect or the possible implementations of the sixth aspect.

According to a sixteenth aspect, an embodiment of this application provides a computer program product, including a computer program. When the computer program is run on a computer, the computer is enabled to perform the method according to any one of the third aspect or the possible implementations of the third aspect, or perform the method according to any one of the fourth aspect or the possible implementations of the fourth aspect, or perform the method according to any one of the fifth aspect or the possible implementations of the fifth aspect, or perform the method according to any one of the sixth aspect or the possible implementations of the sixth aspect.

In addition, for technical effects brought by any one of the possible implementations of the third aspect to the sixteenth aspect, refer to technical effects brought by different implementations in the system part. Details are not described herein again.

## BRIEF DESCRIPTION OF DRAWINGS

FIG. 1 is a schematic flowchart of a conventional contention-based random access process method;
FIG. 2 is a schematic flowchart of a two-step contention-based random access process method;
FIG. 3 is a schematic diagram of a resource location according to an embodiment of this application;
FIG. 4 is a schematic diagram of a static resource allocation mode according to an embodiment of this application;
FIG. 5 is a schematic diagram of a TDM resource allocation mode according to an embodiment of this application;
FIG. 6 is a schematic diagram of a shared resource configuration manner according to an embodiment of this application;
FIG. 7 is a schematic diagram of a network architecture to which an embodiment of this application is applicable;
FIG. 8 is a schematic diagram of a first waveform indication method according to an embodiment of this application;
FIG. 9 is a schematic diagram of a second waveform indication method according to an embodiment of this application;
FIG. 10 is a schematic diagram of a third waveform indication method according to an embodiment of this application;
FIG. 11 is a schematic diagram of a fourth waveform indication method according to an embodiment of this application;
FIG. 12 is a schematic diagram of a fifth waveform indication method according to an embodiment of this application;
FIG. 13 is a schematic diagram of a sixth waveform indication method according to an embodiment of this application;
FIG. 14 is a schematic diagram of a structure of an apparatus 1400 according to an embodiment of this application; and
FIG. 15 is a schematic diagram of a structure of another apparatus 1500 according to an embodiment of this application.

## DESCRIPTION OF EMBODIMENTS

In a long term evolution (long term evolution, LTE) system, only a discrete Fourier transform-spread-orthogonal frequency division multiplexing (discrete Fourier transform-spread-orthogonal frequency division multiplexing, DFT-s-OFDM) waveform is supported during uplink data transmission. In a new radio (new radio, NR) system, a cyclic prefix orthogonal frequency division multiplexing (cyclic prefix orthogonal frequency division multiplexing, CP-OFDM) waveform is introduced. In other words, the NR system supports uplink data transmission using a DFT-s-OFDM waveform or a CP-OFDM waveform. Currently, in wireless communication, a terminal and a network device determine a waveform used for uplink data transmission in an initial random access (random access, RA) process.

Usually, the terminal initiates an RA process when the terminal is in the following scenarios: (1) initial access happens, that is, an RRC connection is established, when the terminal is in a radio resource control idle (radio resource control idle, RRC_IDLE) state; (2) a radio resource control (radio resource control, RRC) connection is reestablished; (3) a cell handover (handover) happens; (4) an uplink synchronization status of the terminal is uplink asynchronization, for example, when downlink data arrives, the terminal needs to respond hybrid automatic repeat request (hybrid automatic repeat request, HARQ) information (such as an acknowledgment (acknowledge, ACK) or a negative acknowledgment (non-acknowledge, NACK)) but uplink is not synchronized; or when uplink data arrives, uplink is not synchronized; (5) a transition from a radio resource control inactive state (transition from RRC_INACTIVE) happens; (6) time alignment is established when a secondary cell (secondary cell, SCell) is added (to establish time alignment at SCell addition); (7) a request for other service information (request for other SI) is sent; and (8) a beam recovery request (beam recovery request) is sent.

Generally, the RA process is classified into a contention-based RA process and a non-contention-based RA process. In the non-contention-based RA process, the network device allocates a dedicated random access channel (random access channel, RACH) resource to the terminal for access. However, when the dedicated RACH resource is insufficient, the network device indicates the terminal to initiate a contention-based RA process. Alternatively, the terminal may initiate a contention-based RA process according to a requirement of the terminal, to reduce a possibility of a communication failure.

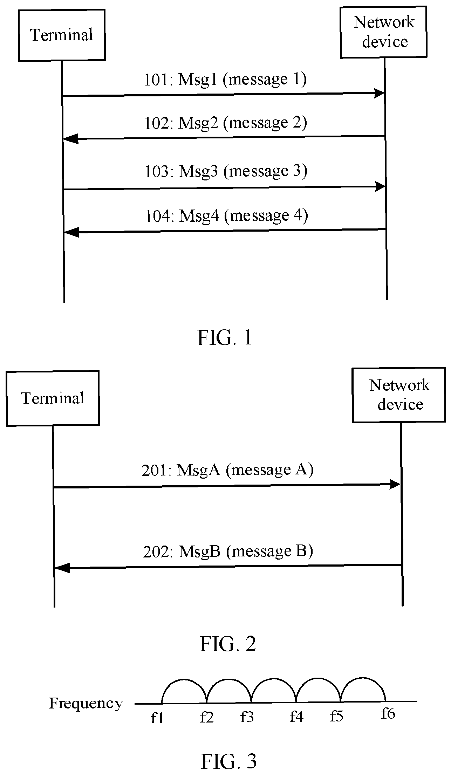

Specifically, as shown in FIG. 1, a conventional contention-based RA process may include four steps, which are respectively as follows:

101: The terminal sends a Msg1 (message 1, message 1) to the network device. The Msg1 is carried on a RACH, and is used to carry a preamble (preamble) sequence sent by the terminal to the network device. For the contention-based RA process, the preamble is randomly selected by the terminal. Usually, the preamble is carried and sent on a physical random access channel (physical random access channel, PRACH) resource indicated by a random access radio network temporary identifier (random access radio network temporary identifier, RA-RNTI). According to a specification, a MSG1 preamble always uses a DFT-s-OFDM waveform.

102: The network device receives the Msg1 from the terminal, and returns a Msg2 to the terminal. The Msg2 may be understood as a response to the Msg1 that is sent by the network device to the terminal, that is, a random access response (random access response, RAR). The Msg2 is carried on a physical downlink shared channel (physical downlink shared channel, PDSCH), and may include information used to indicate an uplink resource allocated to a Msg3, information used to indicate a waveform used to send the Msg3, and the like. The uplink resource allocated for the Msg3 is a physical uplink shared channel (physical uplink shared channel, PUSCH) resource.

103: The terminal receives the Msg2 from the network device, and sends the Msg3 to the terminal. The Msg3 is carried on a PUSCH, and is used by the terminal to request the network device to establish a radio resource control (radio resource control, RRC) connection. The waveform used for the Msg3 is a waveform indicated by the Msg2. Subsequently, when sending uplink data to the network device, the terminal continues to use the waveform indicated by the Msg2.

104: The network device receives the Msg3 from the terminal, and returns a Msg4 to the terminal. The Msg4 is carried on a PDSCH and is used for a base station to notify the terminal of a successful random access contention.

With development of wireless communications technologies, to reduce a delay of a contention-based random access process, a two-step (two-step) non-contention-based random access process is introduced. Details are shown in FIG. 2, which are respectively as follows:

201: The terminal sends a MsgA to the network device. The MsgA includes functions of the Msg1 and the Msg3 in the conventional contention-based SA process.

202: The network device receives the MsgA from the terminal, and sends a MsgB to the terminal. The MsgB includes functions of the Msg2 and the Msg4 in the conventional contention-based SA process.

For the Msg1, the Msg2, the Msg3, and the Msg4, refer to related descriptions in FIG. 1. It may be understood that although the Msg1 and the Msg3 are sent in parallel, the Msg1 is carried on an RACH, and the Msg3 is carried on a PUSCH. Currently, the MSG1 preamble always uses a DFT-s-OFDM waveform, and the Msg3 also always uses a DFT-s-OFDM waveform. The Msg2 carries information used to indicate a waveform used to send uplink data. After the random access is completed, uplink data may be subsequently sent by using the waveform indicated by the Msg2.

It should be noted that the terminal sends uplink data by using a PUSCH resource. The waveform used by the terminal to send uplink data is a waveform used for a PUSCH.

Further, in some embodiments, when the network device needs to modify the waveform used by the terminal to send uplink data after an RRC connection is established, the network device may indicate, by using a radio resource control (radio resource control, RRC) connection reconfiguration (RRC connection reconfiguration) message, a modified waveform used by the terminal to send uplink data. For example, a waveform may be modified by using a waveform setting (transformPrecoder) in a PUSCH control (pusch-config) field in an RRC connection reconfiguration message, where enable indicates a DFT-s-OFDM waveform, and disable indicates a CP-OFDM waveform. If an RRC connection reconfiguration message does not include a pusch-config message, or an RRC connection reconfiguration message includes a pusch-config field but the pusch-config field does not include transformPrecoder, it indicates that a waveform does not change, and a previous waveform is used.

After the CP-OFDM waveform is introduced into the NR system, only a solution in which a waveform used for a PUSCH may be modified by using an RRC connection reconfiguration message is put forward. However, for a terminal, currently, there is no feasible solution for determining which waveform should be used for a PUSCH.

It should be known that uplink transmit power of a PUSCH may be understood as transmit power used by a message carried on the PUSCH, and is limited by an upper limit of the transmit power of the PUSCH. The upper limit of the transmit power of the PUSCH is related to a maximum transmit power capability of the terminal and a maximum transmit power reduction (maximum output power reduction, MPR). The MPR is determined based on a waveform used for a PUSCH, a modulation scheme, and a PUSCH resource location. Therefore, the waveform used for the PUSCH directly affects maximum uplink transmit power of the PUSCH, and affects uplink data transmission of the terminal. For example, network freezing occurs, affecting user experience. Further, for a terminal, how to determine which waveform should be used for a PUSCH of the terminal plays an important role in maximum uplink transmit power of the PUSCH.

Based on this, an embodiment of this application provides a waveform indication solution. In one manner, a network device determines, for a terminal, a waveform to be used for a PUSCH, and indicates the waveform to the terminal. In another manner, a terminal reports, to a network device according to a requirement, a waveform expected to be used for a PUSCH, so that the network device indicates the terminal to perform waveform switching.

Before solutions provided in embodiments of this application are described in detail, the following first describes technical concepts and technical terms in the embodiments of this application.

**(1) Uplink transmit power of a PUSCH**

The uplink transmit power of the PUSCH may meet the following expression:

$$P_{PUSCH, b, f, c}\ (i, j, q_d, l) =$$
$$\min \left\{ \begin{array}{l} P_{cmax, f, c}(i), \\ P_{o\_PUSCH, b, f, c}(j) + 10\log_{10}(2^{\mu} \cdot M_{RB, b, f, c}^{PUSCH}(i)) + \alpha_{b, f, c}(j) \cdot PL_{b, f, c}(q_d) + \Delta_{TF, b, f, c}(i) + f_{b, f, c}(i, \ l) \end{array} \right\}$$

$P_{PUSCH, b, f, c (i, j, qd, l)}$ (which is referred to as $P_{PUSCH}$ in the following descriptions) is the uplink transmit power of the PUSCH, $P_{cmax, f, c}(i)$ (which is referred to as Pcmax in the following descriptions) is an upper limit of transmit power of the PUSCH, $P_{o\_PUSCH, b, f, c}(j)$ is initial transmit power of the PUSCH, $\mu$ is an impact factor of transmission bandwidth on transmit power, $M_{RB, b, f, c}^{PUSCH}(i)$ is transmission bandwidth $\alpha_{b, f, c}(j)$ is a path loss conversion factor, $PL_{b, f, c}(q_d)$ is a downlink path loss between a terminal and a network device, $\Delta_{TF, b, f, c}(i)$ is an impact amount of a code rate on transmit power, and $f_{b, f, c}(i, l)$ is a power adjustment amount indicated by the network device by using a transmit power control (transmit power control, TPC) command. Specifically, for $P_{PUSCH, b, f, c (i, j, q, d, l)}$, $P_{o\_PUSCH, b, f, c}(j)$, $\mu$, $M_{RB, b, f, c}^{PUSCH}(i)$, $\alpha_{b, f, c}(j)$, $PL_{b, f, c}(q_d)$, $\Delta_{TF, b, f, c}(i)$, and $f_{b, f, c}(i, l)$, refer to related descriptions in 3GPP TS 38.213 V15.6.0.

The first item in the braces min is the upper limit of the transmit power of the PUSCH $P_{cmax, f, c}(i)$, which is referred to as $P_{cmax, f, c}$ in the following descriptions. The second item is required power of the PUSCH calculated through a power control process, which is hereinafter referred to as Pcal. In a place with poor coverage of the network device, the uplink transmit power of the PUSCH is mainly limited by $P_{cmax, f, c}$.

For example, the upper limit of the transmit power of the PUSCH $P_{cmax, f, c}(i)$ is briefly referred to as $P_{cmax, f, c}$, and the upper limit of the transmit power of the PUSCH meets the following expression:

$$P_{cmax\_L, f, c} \leq P_{cmax, f, c} \leq P_{cmax\_H, f, c};$$
$$P_{cmax\_H, f, c} = \min \{ P_{EMAX, c} - \Delta T_{C, c},$$
$$(P_{powerClass} - \Delta P_{powerClass}) - \max(\max(MPR_c, \ A - MPR_c) + \Delta T_{IB, c} + \Delta T_{C, c} + \Delta T_{RxSRS, \ c}), P - MPR_c) \};$$
$$P_{cmax\_H, f, c} = \min \{ P_{EMAX, c}, P_{powerClass} - \Delta P_{powerClass} \}$$

$P_{cmax, f, c}$ is the upper limit of the transmit power of the PUSCH, $P_{cmax\_L, f, c}$ is a minimum value of the upper limit of the transmit power of the PUSCH, $P_{cmax\_H, f, c}$ is a maximum value of the upper limit of the transmit power of the PUSCH, $P_{EMAX, c}$ is maximum transmit power indicated by the network device to the terminal by using RRC signaling,

$\Delta T_{C,c}$ is a constant, $P_{powerClass}$ is a maximum transmit power capability of the terminal, $\Delta P_{powerClass}$ is a constant, $MPR_c$ is a maximum transmit power reduction value, $A\text{-}MPR_c$ is an additional power reduction value, $\Delta T_{IB,c}$ is an additional power offset, $\Delta T_{RxSRS,c}$ is a constant, and $P\text{-}MPR_c$ is a maximum power reduction value existing when a standard of an amount of electromagnetic radiation absorbed by a human body from a terminal is met. Specifically, for $P_{cmax,f,c}$, $P_{cmax\_L,f,c}$, $P_{cmax\_H,f,c}$, $P_{EMAX,c}$, $\Delta T_{C,c}$, $P_{powerClass}$, $\Delta P_{powerClass}$, $MPR_c$, $A\text{-}MPR_c$, $\Delta T_{IB,c}$, $\Delta T_{RxSRS,c}$, and $P\text{-}MPR_c$, refer to related descriptions in 3GPP TS 38.101-1 V15.6.0. Details are not described herein again.

When some scenario-related constants in the foregoing expression about the upper limit of the transmit power of the PUSCH are ignored, and only the maximum transmit power capability of the terminal, $MPR_c$, and $P\text{-}MPR_c$ are considered, the expression of the upper limit of the transmit power of the PUSCH may be simplified into Expression 1:

$$P_{cmax} = P_{max} - \max(MPR, P - MPR) \qquad \text{Expression 1}$$

$P_{cmax}$ is a short form of the upper limit of the transmit power of the PUSCH, $P_{max}$ is the maximum transmit power capability of the terminal, MPR is the maximum transmit power reduction value, and P-MPR is the maximum transmit power reduction value existing when the standard of the amount of electromagnetic radiation absorbed by a human body from a terminal is met.

The amount of electromagnetic radiation absorbed by a human body from a terminal may be measured by using a specific absorption rate (specific absorption rate, SAR). The SAR indicates an amount of electromagnetic radiation absorbed by human tissue per kilogram within 6 minutes. Usually, a larger SAR indicates a larger amount of electromagnetic radiation absorbed by a human body from a terminal. According to the federal communications commission (federal communications commission, FCC), the standard of the amount of electromagnetic radiation absorbed by a human body is that the SAR is less than 1.6 watt/kilogram. In Europe and China, the standard of the amount of electromagnetic radiation absorbed by a human body is that the SAR is not greater than 2 watt/kilogram. Specifically, P-MPR is determined by the terminal based on a distance between a mobile phone and a human body and the standard of the amount of electromagnetic radiation absorbed by a human body from a terminal.

Further, if an impact (that is, a scenario in which the P-MPR is 0) of the P-MPR on the upper limit of the transmit power of the terminal is not considered, Expression 1 may be further simplified into Expression 2:

$$P_{cmax} = P_{max} - MPR \qquad \text{Expression 2}$$

It can be learned from Expression 2 that Pcmax is mainly determined by Pmax and MPR. Expression 2 also proves that the upper limit of the transmit power of the PUSCH described above is related to the maximum transmit power capability of the terminal and the MPR.

Based on Expression 2, an expression of uplink transmit power of the terminal can be simplified to Expression 3: Pcal needs to be supplemented.

$$P_{PUSCH} = \min(Pmax - MPR, Pcal) \qquad \text{Expression 3}$$

**(2) MPR**

The MPR is determined based on a waveform used for a PUSCH, a modulation scheme, and a PUSCH resource location. The modulation scheme and the PUSCH resource location are indicated by a network device to a terminal. MPRs of different waveforms, modulation schemes, and PUSCH resource locations are pre-stored in the terminal before delivery of the terminal. Usually, the MPR does not exceed specifications of a communications protocol. For different power classes, MPR values specified in the communications protocol may be different.

For example, for a power class 3 (power class 3, PC 3), for a specification of an MPR in an NR protocol, refer to Table 1.

**Table 1**

| Modulation (modulation) | | MPR (dB) | | |
|---|---|---|---|---|
| | | Edge RB allocation | Outer RB allocation | Inner RB allocation |
| DFT-s-OFDM | Pi/2 BPSK | ≤3.5[1] | ≤1.2[1] | ≤1.2[1] |
| | | 0.5[2] | 0.5[2] | 0[2] |
| | QPSK | ≤1 | | 0 |
| | 16 QAM | ≤2 | | ≤1 |
| | 64 QAM | ≤2.5 | | |
| | 256 QAM | 4.5 | | |
| CP-OFDM | QPSK | ≤3 | | ≤1.5 |
| | 16 QAM | ≤3 | | ≤2 |
| | 64 QAM | ≤3.5 | | |
| | 256 QAM | ≤6.5 | | |
| Note 1: being applied to a time division duplexing (time division duplexing, TDD) mode when uplink (uplink, UL) bandwidths are n40, n41, n77, n78, and n79. Note 2: being applied to a frequency division duplexing (frequency division duplexing, FDD) mode, or applied to the TDD mode when a UL bandwidth is a value other than n40, n41, n77, n78, and n79. | | | | |

As shown in Table 1, when the waveform used by the terminal is CP-OFDM, the modulation scheme is QPSK, and a PUSCH resource scheduled by the network device for the terminal is an inner RB, a maximum value of the MPR cannot exceed 1.5 dB. For example, when a maximum transmit power capability of the terminal is 23 dB, and when the waveform used by the terminal is CP-OFDM, the modulation scheme is QPSK, and a PUSCH resource scheduled by the network device for the terminal is an inner RB, a maximum of a reduction of the terminal is 1.5 dB. It is assumed that a reduction value is x, that is, an upper limit of transmit power of the PUSCH of the terminal may reach (23-x) dB.

For example, for a power class 2 (power class 2, PC 2), for a specification of an MPR in the NR protocol, refer to Table 2.

**Table 2**

| Modulation (modulation) | | MPR (dB) | | |
|---|---|---|---|---|
| | | Edge RB allocation | Outer RB allocation | Inner RB allocation |
| DFT-s-OFDM | Pi/2 BPSK | ≤3.5 | ≤0.5 | 0 |
| | QPSK | ≤3.5 | ≤1 | 0 |
| | 16 QAM | ≤3.5 | ≤2 | ≤1 |
| | 64 QAM | ≤3.5 | ≤2.5 | |
| | 256 QAM | ≤4.5 | | |
| CP-OFDM | QPSK | ≤3.5 | ≤3 | ≤1.5 |
| | 16 QAM | ≤3.5 | ≤3 | ≤2 |
| | 64 QAM | ≤3.5 | | |
| | 256 QAM | ≤6.5 | | |

It can be learned from Table 1 and Table 2 that, the MPR values specified in the protocol are all less than or equal to specific values. This indicates that the terminal may select a proper MPR value of the terminal, but the selected MPR value cannot exceed the limitation in Table 1 or Table 2.

It should be noted that, in Table 1 and Table 2 an edge resource block (edge resource block, Edge RB) indicates an RB located on a frequency band boundary used for NR communication, and an outer resource block (outer resource block, Outer RB) is located between an inner resource block (inner resource block, Inner RB) and an edge RB. For example, an example in which a bandwidth of a frequency band used in an NR system is 20 M is used. FIG. 3 is a schematic diagram of a frequency band used for NR communication. An RB located between a frequency f1 and a frequency f2 or between a frequency f5 and a frequency f6 is an edge RB, an RB located between the frequency f2 and a frequency f3 or between a frequency f4 and the frequency f5 is an outer RB, and an RB located between the frequency f3 and the frequency f4 is an inner RB. For specific values of f1, f2, and so on, refer to descriptions in the communications protocol.

For the two waveforms, the communications protocol defines different reduction values mainly because the two waveforms have different peak-to-average ratios. The peak-to-average ratio is a measurement parameter of a waveform, and is a ratio obtained by dividing an amplitude of the waveform by a valid value (RMS). Generally, a peak-to-average ratio of CP-OFDM is greater than a peak-to-average ratio of DFT-s-OFDM. With same total power, a CP-OFDM waveform is more likely to cause a radio frequency power amplifier (power amplifier, PA) to enter a non-linear area, causing signal distortion. Therefore, in a same modulation scheme and PUSCH resource, an MPR allowed by CP-OFDM is greater than an MPR allowed by DFT-s-OFDM.

**(3) Non-standalone (Non-Standalone, NSA) networking and standalone (Standalone, SA) networking**

In standalone networking, a new 5G network is deployed, including a new base station, a backhaul link, and a core network. In NSA networking, a 5G network is deployed by using an existing 4G infrastructure. An NSA architecture-based 5G carrier carry only user data, and control signaling is still transmitted through a 4G network.

In an NSA mode, an LTE standard (LTE for short) and an NR standard (NR for short) work at the same time. In terms of uplink transmit power, a current communications protocol supports only a PC 3. When the PC 3 is used, an upper limit of transmit power of a PUSCH is 23 dBm. Therefore, total power of the LTE standard and the NR standard is limited to 23 dBm. When the total power is allocated to the LTE standard and the NR standard, any one of Mode 1 to Mode 3 may be used.

Mode 1: Semi-static mode

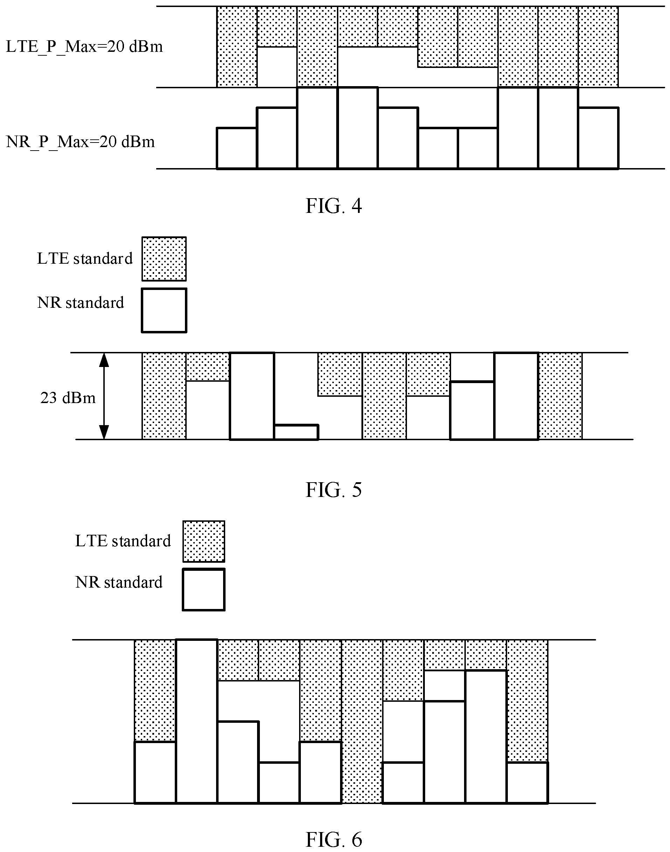

In a semi-static mode, the power is evenly allocated. A value of maximum LTE power LTE_P_Max is 20 and a value of maximum NR power NR_P_Max is 20. As shown in FIG. 4, LTE power and NR power may be separately controlled. When the LTE power is under control, the NR power is not affected; and when the NR power is under control, the LTE power is not affected.

Mode 2: Time-division multiplexing (time-division multiplexing, TDM) mode

As shown in FIG. 5, a network side configures a TDM mode and a specific slot allocation mode for a terminal, and an LTE standard and an NR standard use different slots to transmit data.

Mode 3: Dynamic power sharing mode

An LTE standard and an NR standard share total power, and the LTE standard and the NR standard are concurrent. For example, as shown in FIG. 6, LTE_P_Max + NR_P_Max <= ENDC_P_Max. ENDC_P_Max indicates maximum total power that can be shared by the LTE standard and the NR standard.

In an SA mode, the current communications protocol supports a PC 2 and a PC 3. In an SA mode, in terms of uplink transmit power, when a power class is the PC 2, a typical value of transmit power of a PUSCH is 26 dBm; and when a power class is the PC 3, a typical value of transmit power of a PUSCH is 23 dBm.

**(4) Bandwidth part (bandwidth part, BWP)**

A concept of the BWP is introduced in an NR system, and the BWP may be understood as some subsets of operating bandwidth of the system. A BWP is defined as a combination of a plurality of consecutive resource blocks (Resource Blocks, RBs) in one carrier. In a communications protocol, it is supported that a plurality of BWPs is configured for a same cell, and each BWP has different uplink and downlink pre-configuration parameters. For the BWP, it may be understood that one BWP is equivalent to a virtual cell, and different BWPs may be dynamically switched based on downlink control information (downlink control information, DCI) carried on a physical downlink control channel (physical downlink control channel, PDCCH). A network side may configure one or more BWPs for a terminal. In an example, the NR system may configure four BWPs for the terminal.

(5) In embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" usually represents an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

It should be understood that the terms used in this application are merely for the purpose of describing specific embodiments, and are not intended to limit this application. The terms "a", "the", and "this" of singular forms used in this application and the appended claims are also intended to include plural forms, unless otherwise specified in the context clearly.

In addition, although terms such as first, second, and third may be used in this application to describe various information, the information should not be limited to these terms. These terms are only used to differentiate information of a same type. For example, without departing from the scope of this application, first information may also be referred to as second information, and similarly, second information may also be referred to as first information. Depending on the context, for example, words "if" used herein may be explained as "while" or "when" or "in response to determining".

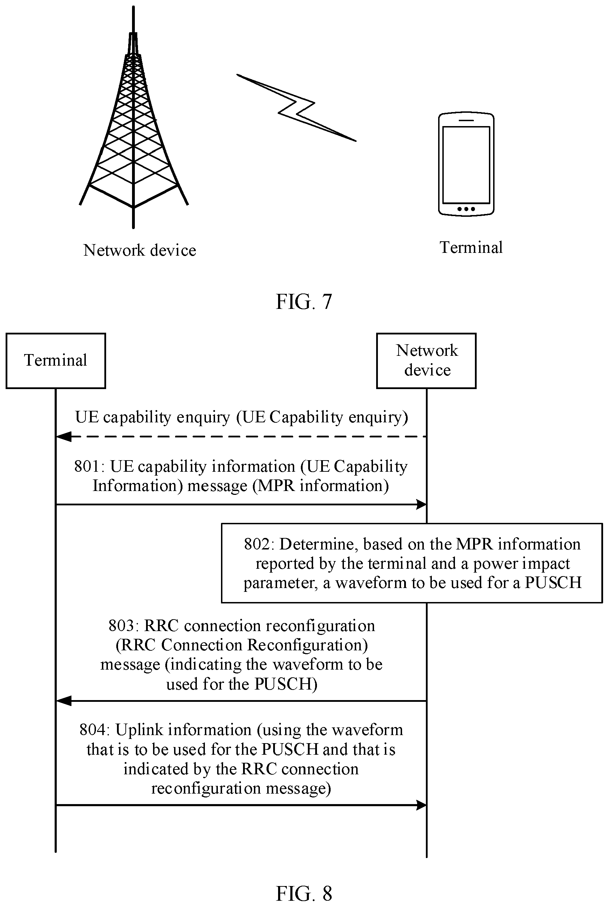

FIG. 7 is a diagram of an architecture a communications system to which an embodiment of this application is applicable. As shown in FIG. 7, the communications system in this embodiment of this application includes a network device and a terminal. A communication manner between the terminal and the network device is wireless communication. The terminal in this embodiment of this application is a device having a wireless transceiver function. The terminal may also be referred to as terminal equipment (terminal equipment), user equipment (user equipment, UE), a mobile station (mobile station, MS), a mobile terminal (mobile terminal, MT), an access terminal device, a vehicle-mounted terminal device, an industrial control terminal device, a UE unit, a UE station, a mobile station, a remote station, a remote terminal device, a mobile device, a LTE terminal device, a wireless communications device, a LTE agent, a LTE apparatus, or the like. A location of the terminal may be fixed or mobile. It should be noted that the terminal may support at least one wireless communications technology, for example, long term evolution (long term evolution, LTE), NR, and wideband code division multiple access (wideband code division multiple access, WCDMA). For example, the terminal may be a mobile phone (mobile phone), a tablet computer (pad), a desktop computer, a notebook computer, an all-in-one computer, a vehicle-mounted terminal, a virtual reality (virtual reality, VR) terminal, an augmented reality (augmented reality, AR) terminal, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal in a future mobile communication network, a terminal in a future evolved public land mobile network (public land mobile network, PLMN), or the like. For another example, the terminal in this embodiment of this application may alternatively be an apparatus having a transceiver function, for example, a chip system. The chip system may include a chip, and may further include another discrete component.

In this embodiment of this application, the network device is a device that provides a wireless access function for the terminal, and may also be referred to as an access network device, a radio access network (radio access network, RAN) device, or the like. The network device may support at least one wireless communications technology, such as LTE, NR, or WCDMA. For example, the network device includes but is not limited to: a next-generation NodeB (generation node B, gNB) in a fifth-generation (5th-generation, 5G) mobile communications system, an evolved NodeB (evolved node B, eNB), a radio network controller (radio network controller, RNC), a node B (node B, NB), a base station controller (base station controller, BSC), a base transceiver station (base transceiver station, BTS), a home base station (for example, a home evolved node B or a home node B, HNB), a baseband unit (baseband unit, BBU), a transmission reception point (transmitting and receiving point, TRP), a transmission point (transmitting point, TP), a mobile switching center, a small cell, a pico cell, and the like. The network device may alternatively be a radio controller, a centralized unit (centralized unit, CU), and/or a distributed unit (distributed unit, DU) in a cloud radio access network (cloud radio access network, CRAN) scenario. Alternatively, the network device may be a relay station, an access point, a vehicle-mounted device, a terminal device, a wearable device, a network device in future mobile communication, a network device in a future evolved PLMN, or the like. In some embodiments, the network device may alternatively be an apparatus, for example, a chip system, that provides a wireless communication function for the terminal. For example, the chip system may include a chip, and may further include another discrete component.

It should be understood that the communications system shown in FIG. 7 is merely an example for description, and does not constitute a limitation on the communications system in this embodiment of this application. For example, a quantity of network devices and a quantity of terminals in the communications system are not limited in this embodiment of this application. For example, when the communications system in this embodiment of this application includes a plurality of network devices, coordinated multipoint communication may be performed between the network devices. For example, the communications system includes a plurality of macro base stations and a plurality of micro base stations. Coordinated multipoint communication may be performed between the macro base stations, between the micro base stations, or between the macro base station and the micro base station.

It should be noted that the architecture and the service scenario of the communications system described in embodiments of this application are intended to describe the technical solutions in embodiments of this application more clearly, and do not constitute a limitation on the technical solutions provided in embodiments of this application. A person of ordinary skill in the art may know that: With evolution of the architecture of the communications system and emergence of a new service scenario, the technical solutions provided in embodiments of this application are also applicable to a similar technical problem.

The following describes in detail the solutions provided in this application with reference to specific embodiments.

With reference to FIG. 8, the following describes in detail a waveform indication method provided in an embodiment of this application. FIG. 8 is a schematic flowchart of a waveform indication method according to an embodiment of this application. In FIG. 8, a case in which a network device determines a waveform to be used for a PUSCH for a terminal and indicates the waveform to the terminal is first described in detail.

801: The terminal sends a LTE capability information (LTE Capability Information) message to the network device. The UE capability information message includes at least MPR information of the terminal.

For example, the terminal may send the UE capability information message to the network device in a network attachment process or after a random access process is completed. For another example, after receiving a UE capability enquiry (UE capability enquiry) sent by the network device, the terminal may send the LTE capability information message to the network device, and use the UE capability information message to carry the MPR information. For another example, the terminal may alternatively report the MPR information supported by the terminal to the network device by using another RRC signaling message.

In addition to the MPR information, the UE capability information message may further include other capability information of the terminal. For example, the capability information of the terminal may include: a frequency band and a frequency band combination that are supported by the UE, and a power class supported by each frequency band and frequency band combination of the UE.

In some embodiments, when a distance range between the terminal and the network device changes, a path loss is large, or an amount of to-be-sent data on the terminal increases, the terminal may send the MPR information to the network device when the network device reports the capability information.

In some embodiments, in a random access process, the network device indicates, to the terminal by using a Msg2, a waveform to be used for a PUSCH. The waveform may be specified in a communications protocol, for example, a first waveform. The terminal sends the UE capability information message to the network device by using the first waveform indicated by the Msg2.

In a possible implementation, when sending the MPR information of the terminal to the network device, the terminal may not send the MPR information to the network device by using the LTE capability information message, but may send the MPR information to the network device by using another protocol message, or send the MPR information to the network device by using a new message. A message used by the terminal to send the MPR information to the network device is not specifically limited in this embodiment of this application.

The MPR information of the terminal is used to represent MPRs that are of a waveform supported by the terminal when the terminal sends uplink data and that are in different modulation schemes.

In Example 1, the MPR information includes a correspondence between different resource block (RB) locations, different modulation schemes, two waveforms supported by the terminal when the terminal sends uplink data, and different MPR values.

For example, refer to Table 3.

**Table 3**

| Modulation (modulation) | | MPR (dB) | | |
|---|---|---|---|---|
| | | Edge RB allocation | Outer RB allocation | Inner RB allocation |
| DFT-s-OFDM | Pi/2 BPSK | 3.5 | 0.5 | 0 |
| | QPSK | 3.5 | 1 | 0 |
| | 16 QAM | 3.5 | 2 | 1 |
| | 64 QAM | 3.5 | 2.5 | |
| | 256 QAM | 4.5 | | |
| CP-OFDM | QPSK | 3.5 | 3 | 1.5 |
| | 16 QAM | 3.5 | 3 | 2 |
| | 64 QAM | 3.5 | | |
| | 256 QAM | 6.5 | | |

In Example 2, the MPR information includes a plurality of difference values. The difference value is a difference between MPR values that correspond to two waveforms supported by the terminal device when the terminal device sends uplink data and that are in a same modulation scheme at a same RB location.

It can be learned from Table 1 and Table 2 that MPR values of the two waveforms in different modulation schemes are the same or have a relatively small difference in an edge RB allocation resource. Optionally, when reporting MPR information, the terminal may not report a difference value in the edge RB allocation resource. For example, refer to Table 4.

**Table 4**

| Modulation (modulation) | | MPR (dB) | |
|---|---|---|---|
| | | Outer RB allocation | Inner RB allocation |
| |CP-OFDM - DFT-s-OFDM| | QPSK | 2 | 1.5 |
| | 16 QAM | 1 | 1 |
| | 64 QAM | 1 | 1 |
| | 256 QAM | 2 | 2 |

Compared with Example 1, in Example 2, an amount of to-be-reported data can be reduced, resource occupation is reduced, and a reporting rate is increased.

In Example 3, the MPR information includes a difference between MPR values that correspond to two waveforms supported by the terminal device when the terminal device sends uplink data and that are in a different modulation scheme at an inter RB. For example, refer to Table 5.

**Table 5**

| Modulation (modulation) | | Inner RB allocation |
|---|---|---|
| |CP-OFDM - DFT-s-OFDM| | QPSK | 1.5 |
| | 16 QAM | 1 |
| | 64 QAM | 1 |
| | 256 QAM | 2 |

Compared with Example 2 and Example 1, in Example 3, an amount of to-be-reported data can be reduced, resource occupation is reduced, and a reporting rate is increased.

In Example 4, the MPR information includes a difference between MPR values that correspond to two waveforms supported by the terminal device when the terminal device sends uplink data and that are in a QPSK modulation scheme at an inter RB, for example, ICP-OFDM - DFT-s-OFDM|, inter RB: 1.5.

Compared with Example 3, in Example 4, an amount of to-be-reported data is further reduced, resource occupation is reduced, and a reporting rate is increased.

In an example, the MPR information of the terminal may be used as a capability item of an uplink physical layer. For example, the MPR value may be included in a feature set downlink parameter (Feature Set Uplink parameter).

Refer to a field included in the feature set uplink parameter shown in Table 6.

**Table 6**

| Definition for a parameter (definition for a parameter) | Per (capability item range) | M (mandatory or not) | FDD-TDD DIFF (whether a difference between TDD and FDD exists) | FR1-FR2 DIFF (whether a difference between FR1 and FR2 (indicating frequency bands) exists) |
|---|---|---|---|---|
| Scaling factor (scaling factor): indicates a scaling | Fs | Tbd | No | No |
| factor applied to a bandwidth in calculation of a maximum data rate | | | | |

For example, in this embodiment of this application, the MPR value supported by the terminal is added to the feature set uplink parameter. Refer to Table 7.

**Table 7**

| Definition for a parameter (definition for a parameter) | Per (capability item range) | M (mandatory or not) | FDD-TDD DIFF (whether a difference between TDD and FDD exists) | FR1-FR2 DIFF (whether a difference between FR1 and FR2 (indicating frequency bands) exists) |
|---|---|---|---|---|
| MPR/MPR difference (diff): indicates an MRP value or an MPR difference of a terminal: a specific value | band | No | No | Yes |

802: The network device determines, based on the MPR information reported by the terminal, a waveform to be used for a PUSCH.

In some embodiments, the network device may estimate, based on the MPR information and a power impact parameter that can affect uplink transmit power, which waveform can be used by the terminal to bring a relatively high transmit power gain of the terminal, so as to indicate, to the terminal, the waveform to be used for the PUSCH. Naming of the power response parameter is not limited in this embodiment of this application, and another naming manner may alternatively be used.

In one aspect, it can be learned from Expression 3 that, in a case in which Pcal > Pmax - MPR, uplink transmit power of the terminal varies with an MPR value. Further, in this case, waveform switching may bring an uplink transmit power gain. For example, a maximum transmit power capability Pmax of the terminal is 23 dBm, an MPR value is 1.5 dB, and required power Peal of a PUSCH calculated through a power control process is 23 dBm. In this case, Peal > Pmax - MPR. If the MPR value decreases after waveform switching, the maximum transmit power may be increased. In this way, the waveform switching brings a transmit power gain.

It can be learned from Expression 3 that, the power impact parameter that can affect the uplink transmit power may include the MPR value of the terminal. The power impact parameter may further include the maximum transmit power capability Pmax of the terminal.

For example, in different modulation schemes and different PUSCH resources, MPR values of the terminal are all a maximum value specified in the protocol, and a power class used by the terminal is a PC 3. It can be learned from Table 2 that, in an edge RB resource, values of MPRs are the same, and it may be considered that maximum transmit power corresponding to a DFT-s-OFDM waveform is the same as that corresponding to a CP-s-OFDM waveform. Table 8 shows power gain values generated when a DFT-s-OFDM waveform is used in two RB allocation modes: an inner RB and an outer RB, in different modulation schemes.

**Table 8**

| Modulation scheme | Inter RB | | | Outer RB | | |
|---|---|---|---|---|---|---|
| | MPR (dB) of DFT-s-OFDM | MPR (dB) of CP-OFDM | Value of a DFT-s-OFDM gain | MPR (dB) ofDFT-s-OFDM | MPR (dB) of CP-OFDM | Value of a DFT-s-OFDM gain |
| QPSK | 0 | 1.5 | 1.5 | 1 | 3 | 2 |
| 16QAM | 1 | 2 | 1 | 2 | 3 | 1 |
| 64QAM | 2.5 | 3.5 | 1 | 2.5 | 3.5 | 1 |
| 256QAM | 4.5 | 6.5 | 2 | 4.5 | 6.5 | 2 |

It can be learned from Table 8 that, in a same modulation scheme and a same PUSCH resource, an MPR value of the DFT-s-OFDM waveform is less than or equal to an MPR value of the CP-OFDM waveform. Therefore, when a same modulation scheme and a same PUSCH resource are considered, using the DFT-s-OFDM waveform can bring an uplink transmit power gain in comparison with using the CP-OFDM waveform. Because different modulation schemes and/or PUSCH resources affect a value of an MPR, the power impact parameter that can affect the uplink transmit power may further include a modulation scheme used by the terminal and a PUSCH resource allocated by the network device to the terminal.

In another aspect, it can be learned from the descriptions of NSA and SA in (3) that when different allocation modes for allocating total power are used for LTE and NR, there is a limitation on the maximum transmit power allowed for the terminal.

In Mode 1, maximum transmit power allowed in an NR standard is 20 dBm. With reference to Expression 3, finally used uplink transmit power in the NR standard may be represented by Expression 4:

$$P_{PUSCH} = min(20dBm, Pcal, Pmax - MPR) \qquad \text{Expression 4}$$

Further, Expression 4 may be converted into Expression 5:

$$P_{PUSCH} = min(Pmax - limit\ value, Pcal, Pmax - MPR) \qquad \text{Expression 5}$$

Optionally, in a case in which Pmax - MPR >= 20 dBm, Expression 4 may be further simplified into Expression 6:

$$P_{PUSCH} = min(20\ dBm, Pcal) \qquad \text{Expression 6}$$

It can be learned from Expression 4 that, when Pmax - MPR < 20 dBm and Peal > Pmax - MPR, different MPR values cause different uplink transmit power of the terminal. In other words, when different waveforms are used, uplink transmit power of the terminal device may be different, and waveform switching may bring a power gain.

With reference to Expression 4, the maximum uplink transmit power of the terminal allowed in the communications protocol affects the uplink transmit power of the terminal. The power impact parameter that can affect the uplink transmit power may include the maximum uplink transmit power of the terminal allowed in the communications protocol. The maximum uplink transmit power of the terminal allowed in the communications protocol is also related to a networking mode used by the terminal and/or a power allocation mode of the terminal. Therefore, it may be understood that the networking mode used by the terminal and/or the power allocation mode of the terminal each are/is an impact factor that affects the uplink transmit power. In addition, when the networking mode used by the terminal is SA, no power allocation mode of the terminal exists. Therefore, in this case, the power allocation mode of the terminal is not an impact factor that affects the uplink transmit power. Based on this, the power impact parameter may further include the networking mode used by the terminal and/or the power allocation mode of the terminal. In addition, it should be understood that, when the power impact parameter includes the power allocation mode of the terminal, the networking mode used by the terminal may be NSA by default, and the power impact parameter may include only the power allocation mode of the terminal.

It can be learned from Expression 5 that, in a case in which Mode 1 is used, if Pmax - MPR >= 20 dBm, the MPR does not affect actual transmit power. In Mode 1, if waveform switching is performed based on scenarios, no gain of power increase brought by MPR reduction exists. In comparison, in Mode 2, gains may be obtained in more scenarios. In addition, the CP-OFDM waveform and the DFT-s-OFDM waveform have respective advantages and disadvantages, which are specifically as follows:

CP-OFDM waveform:

Advantages include: flexible allocation; support for a data pilot co-symbol without loss of an RE resource; and support for MIMO transmission.
A disadvantage includes: a large peak-to-average ratio, which results in a large MPR value.

DFT-s-OFDM waveform:

An advantage includes: a small peak-to-average ratio, which results in a small MPR value.
Disadvantages include: using common multiples of 2, 3, and 5 for allocation; not supporting a data pilot co-symbol and losing some RE resources; not supporting MIMO and supporting only a single stream.
It can be learned from the advantages and the disadvantages of the CP-OFDM waveform and the DFT-s-OFDM waveform that the CP-OFDM waveform supports a transmission mode of MIMO spatial multiplexing. Therefore, when the transmission mode of MIMO spatial multiplexing is used, a capability of at least two antennas is needed for transmission. For example, the terminal supports use of 2T4R. 2T indicates that there are two transmit antennas, and 4R indicates that there are four receive antennas. In this case, the maximum transmit power capability of the terminal is a sum of total transmit power capabilities of the two antennas. For example, if a maximum transmit power capability of each transmit antenna is 23 dBm, a maximum transmit power capability of the dual-antenna may be 23 dBm + 23 dBm = 26 dBm. For another example, maximum transmit power capabilities of the two antennas are different. For example, if a maximum transmit power capability of one antenna is 23 dBm, and a maximum transmit power capability of the other antenna is 26 dBm, a maximum transmit power capability of the dual-antenna may be 23 dBm + 26 dBm = 27.76 dBm, that is, the maximum transmit power capability of the dual-antenna is 27.76 dBm. In this case, the maximum transmit power capability of the terminal is related to a quantity of transmit antennas of the terminal and/or a maximum transmit power capability of each transmit antenna. Therefore, when the waveform for the PUSCH is determined, the quantity of transmit antennas of the terminal and/or the maximum transmit power capability of each transmit antenna may be further considered. In other words, the power impact parameter may further include the quantity of transmit antennas of the terminal and/or the maximum transmit power capability of each transmit antenna. In addition, it should be understood that, when the maximum transmit power of each transmit antenna is not specified, a default maximum transmit power of the antenna may be used. When the power impact parameter includes the maximum transmit power capability of the terminal, for example, a maximum transmit power capability of the terminal having a plurality of antennas, the power impact parameter may not include the quantity of transmit antennas of the terminal and/or the maximum transmit power capability of each transmit antenna.
With reference to the foregoing descriptions in the one aspect and the another aspect, in embodiments of this application, a waveform to be used for a PUSCH may be determined based on a current scenario in which the terminal is located. The current scenario in which the terminal is located may be represented by using one or more power response parameters. In an example, as shown in Table 9, a plurality of scenarios are described. Different scenarios may be represented by using a networking mode, a power class, MIMO support (which indirectly indicates a quantity of transmit antennas), a power allocation mode, a maximum transmit power capability of the terminal, and a limit value of maximum transmit power that is specified in the protocol and that constitutes a limitation on the maximum transmit power capability of the terminal.

**Table 9**

| Networking mode | Power class | Whether MIMO is supported | Allocation mode | Maximum transmit power capability of a terminal | Whether limited by a maximum transmit power specified in a protocol | Limit value (dB) |
|---|---|---|---|---|---|---|
| NSA | PC 3 | No (1T2R/ 1T4R) | Mode 1 (semi-static mode) | 23 | Limited | 3 |
| | | | Mode 2 (TDM) | 23 | Not limited | 0 |
| | | | Mode 3 (dynamic power sharing mode) | 23 | Not limited | 0 |
| | | Yes (2T4R) | Mode 1 | 23+23 | Limited | 6 |
| | | | Mode 2 | 23+23 | Limited | 3 |
| | | | Mode 3 | 23+23 | Limited | 3 |
| | PC 2 | No (1T2R/ 1T4R) | Mode 1 | 23 | Not limited | 0 |
| | | | Mode 1 | 26 | Limited | 3 |
| | | | Mode 2 | 26 | Not limited | 0 |
| | | | Mode 3 | 26 | Not limited | 0 |
| | | Yes (2T4R) | Mode 1 | 23+23 | Limited | 3 |
| | | | Mode 1 | 26+23 | Limited | 6/3 |
| | | | Mode 1 | 26+26 | Limited | 6 |
| | | | Mode 2 | 23+23 | Not limited | 0 |
| | | | Mode 2 | 26+23 | Partially limited | 3/0 |
| | | | Mode 2 | 26+26 | Limited | 3 |
| | | | Mode 3 | 26+26 | Limited | 3 |
| | | | Mode 3 | 26+23 | Partially limited | 3/0 |
| | | | Mode 3 | 23+23 | Not limited | 0 |
| SA | PC 3 | No (1T2R/ 1T4R) | | 23 | Not limited | 0 |
| | | No (1T2R/ 1T4R) | | 26 | Limited | 3 |
| | | Yes (2T4R) | | 23+23 | Limited | 3 |
| | PC 2 | No (1T2R/ 1T4R) | | 26 | Not limited | 0 |
| | | Yes (2T4R) | | 26+26 | Limited | 3 |
| | | Yes (2T4R) | | 23+26 | Partially limited | 0/3 |
| | | Yes (2T4R) | | 23+23 | Not limited | 0 |

It should be noted that, in the current communications protocol, in an NSA mode, the PC 2 is not supported to be used. Table 9 is only a possible example provided in this embodiment of this application when the PC 2 is supported to be used in the NSA mode.

"Limited" or "Not limited" in Table 9 refers to whether the maximum transmit power capability of the terminal is limited by the maximum transmit power specified in the communications protocol in the scenario. For example, in an NSA networking mode, when a power class is the PC 3, a quantity of transmit antennas is 1, and a power allocation mode is the static allocation mode, maximum transmit power (that is, an upper limit of transmit power of a PUSCH) allowed by the NR communications protocol is 20 dB, and a maximum transmit power capability of the terminal is 23 dBm. Therefore, the maximum transmit power capability of the terminal is limited to the maximum transmit power specified in the communications protocol, and a limit value is 3 dB. For another example, in an SA networking mode, a power class is the PC 2, a quantity of transmit antennas is 1, and a maximum transmit power allowed by the communications protocol is 26 dBm.

It should be noted that a value (26 dBm or 23 dBm) of a single-T maximum transmit power capability of the terminal in Table 9 is merely an example, and maximum transmit power capabilities of terminals may be different when different processing techniques are used for the terminals. In addition, with improvement of processing techniques, a maximum transmit power capability of the terminal is improved. The 38.101 protocol further introduces a maximum transmit power tolerance (tolerance).

Based on Table 9, different cases may be summarized into five types in embodiments of this application, for example, Type 1 to Type 5.

Type 1: The quantity of transmit antennas of the terminal is 1, and the maximum transmit power capability of the terminal is limited by the maximum transmit power specified in the communications protocol in this scenario, which may be simply described as single-T transmission without power limitation.

Type 2: The quantity of transmit antennas of the terminal is 1, and the maximum transmit power capability of the terminal is not limited by the maximum transmit power specified in the communications protocol in this scenario, which may be simply described as single-T transmission with power limitation.

Type 3: The quantity of transmit antennas of the terminal is greater than 1, and the maximum transmit power capability of the terminal is limited by the maximum transmit power specified in the communications protocol in this scenario, which may be simply described as multi-T transmission with power limitation.

Type 4: The quantity of transmit antennas of the terminal is greater than 1, and the maximum transmit power capability of the terminal is not limited by the maximum transmit power specified in the communications protocol in this scenario, which may be simply described as multi-T transmission without power limitation.

Type 5: The quantity of transmit antennas of the terminal is greater than 1, and a maximum transmit power capability of an antenna of the terminal is limited by the maximum transmit power specified in the communications protocol in this scenario, which may be simply described as multi-T transmission with partial power limitation.

In an example, Type 1 is used as an example. For the terminal, Table 3 is used as an example, showing a correspondence between different resource block (RB) locations, different modulation schemes, two waveforms supported by the terminal when the terminal sends uplink data, and different MPR values. For a resource block location, an outer RB is used as an example. As shown in Table 10, Table 10 uses the PC 2 as an example to show maximum transmit power reductions respectively corresponding to the two waveforms in different modulation schemes and a gain of using the DFT-s-OFDM waveform. In Table 10, an example in which the maximum transmit power capability Pmax of the terminal is 23 dBm and Pmax - MPR > Pcal is used.

**Table 10**

| No power limitation | Inner RB | | | Outer RB | | |
|---|---|---|---|---|---|---|
| Waveform&Modulation scheme | MPR (dB) of DFT-s-OFDM | MPR (dB) of CP-OFDM | Gain of a DFT-s-OFDM waveform | MPR (dB) of DFT-s-OFDM | MPR (dB) of CP-OFDM | Gain of a DFT-s-OFDM waveform |
| QPSK | 0 | 1.5 | 1.5 | 1 | 3 | 2 |
| 16QAM | 1 | 2 | 1 | 2 | 3 | 1 |
| 64QAM | 2.5 | 3.5 | 1 | 2.5 | 3.5 | 1 |
| 256QAM | 4.5 | 6.5 | 2 | 4.5 | 6.5 | 2 |

It can be determined from Table 10 that, in a scenario in which a single T has a limitation, under a same condition, an uplink transmit power gain is obtained by using the DFT-s-ODFM waveform, that is, uplink transmit power of the terminal generated when the DFT-s-OFDM waveform is used is greater than uplink transmit power of the terminal generated when the CP-OFDM waveform is used.

In another example, Type 2 is used as an example. For the terminal, Table 3 is used as an example, showing a correspondence between different resource block (RB) locations, different modulation schemes, two waveforms supported by the terminal when the terminal sends uplink data, and different MPR values. In an example, a networking mode is the NSA, a power class is the PC 2, a resource allocation mode is Mode 1, and a maximum transmit power capability Pmax of the terminal is 23 dBm. With reference to Table 9, in an NSA networking mode, when a power class is the PC 3 and a power allocation mode is Mode 1, a maximum transmit power capability of the terminal is limited by the maximum transmit power specified in the protocol, that is, Pmax is 23 dBm and there is a power limitation of 3 dB. With reference to Expression 4: $P_{PUSCH}$ = min(20dBm, Peal, Pmax - MPR), when maximum transmit power of a single T is 23 dBm, the DFT-s-OFDM waveform provides a power gain in comparison with the CP-OFDM waveform only when the MPR is greater than 3 dB. In a scenario in which a single T has a transmit power limitation, maximum power 23 dBm has a 3 dB power limit, and actual maximum power is 20 dBm. When the 3 dB power limit is taken into consideration, an equivalent MPR value shown in Table 11 may be obtained after the 3 dB power limit is converted into the MPR.

**Table 11**

| Power limit: 3 dB | Inner RB | | | Outer RB | | |
|---|---|---|---|---|---|---|
| Waveform&Modulation scheme | MPR (dB) of DFT-s-OFDM | MPR (dB) of CP-OFDM | Gain of a DFT-s-OFDM waveform | MPR (dB) of DFT-s-OFDM | MPR (dB) of CP-OFDM | Gain of a DFT-s-OFDM waveform |
| QPSK | 0 | 0 | 0 | 0 | 0 | 0 |
| 16QAM | 0 | 0 | 0 | 0 | 0 | 0 |
| 64QAM | 0 | 0.5 | 0.5 | 0 | 0.5 | 0.5 |
| 256QAM | 1.5 | 3.5 | 2 | 1.5 | 3.5 | 2 |

With reference to Table 11, when a modulation scheme is 64QAM or 256QAM, using the DFT-s-OFDM waveform brings a power gain in comparison with using the CP-OFDM waveform. In another modulation scheme, the MPR does not affect the uplink transmit power of the terminal. Based on this, in a scenario in which a single T has a power limitation, when a modulation scheme is 64QAM or 256QAM, the DFT-s-OFDM waveform may be used.

In still another example, a difference between the multi-T type and the single-T type lies in that in the multi-T type, spatial multiplexing affects uplink transmit power of a PUSCH of the terminal. When a channel condition meets a spatial multiplexing condition, data traffic can be doubled by transmitting different code streams on two antennas. However, only the CP-OFDM waveform supports MIMO, that is, spatial multiplexing. Therefore, for the multi-T type, not only a power gain of the DFT-s-OFDM waveform needs to be considered, but also a spatial multiplexing gain of the CP-OFDM waveform needs to be considered. When the power gain of the DFT-s-OFDM waveform is greater than the power gain brought by spatial multiplexing of the CP-OFDM waveform, the DFT-s-OFDM waveform may be used. When the power gain brought by spatial multiplexing of the CP-OFDM waveform is greater than the power gain of the DFT-s-OFDM waveform, the CP-OFDM waveform may be used. With reference to Table 11, in a single-T scenario, when a modulation scheme is 64QAM or 256QAM, using the DFT-s-OFDM waveform brings a power gain in comparison with using the CP-OFDM waveform. However, in a multi-T scenario, when a modulation scheme of a PUSCH is 64QAM or 256QAM, whether a power gain of spatial multiplexing is greater than a power gain of the DFT-s-OFDM waveform may be further determined. When the power gain of the spatial multiplexing is greater than the power gain of the DFT-s-OFDM waveform, the network device may configure, for the terminal, a waveform to be used for a PUSCH as the CP-OFDM waveform.

Similarly, in the multi-T scenario, it also needs to be distinguished whether a limitation of maximum transmit power specified in the communications protocol exists. When a limitation of a maximum transmit power exists, a power gain may be calculated based on an equivalent MPR obtained after the limitation of the maximum transmit power, and then a waveform to be used for a PUSCH is determined by comparing a power gain of the DFT-s-OFDM waveform with a spatial multiplexing gain of the CP-OFDM waveform.

With reference to the foregoing descriptions, regardless of the single-T-type scenario, the multi-T-type scenario, the power-limited scenario, or the power-unlimited scenario, the network device may determine, by using Expression 5 and a spatial multiplexing gain, the waveform to be used for the PUSCH. It should be understood that, in the power-unlimited scenario, a limit value is 0. With reference to Expression 5: $P_{PUSCH}$ = min(Pmax - limit value, Peal, Pmax - MPR), it may be determined that uplink transmit power of the terminal is related to one or more of a maximum transmit power capability of the terminal, an MPR value, or a limit value. The maximum transmit power capability of the terminal device is related to a quantity of transmit antennas used by the terminal, and the maximum transmit antenna capability of the terminal may be a sum of transmit power of a plurality of antennas. The limit value is related to at least one of a networking mode, a power class, or a resource allocation mode used by the terminal. The MPR value is related to at least one of a modulation scheme used by the terminal and a PUSCH resource location.

In an example, a power impact parameter used to determine a waveform to be used for a PUSCH may include but is not limited to one or more of the following parameters:
a networking mode of the terminal, a power class of the terminal, a quantity of transmit antennas of power, a power allocation mode of the terminal, a maximum transmit power capability of the terminal, maximum transmit power specified in the communications protocol, a limit value of the maximum transmit power capability of the terminal that is limited by a capability of the maximum transmit power specified in the communications protocol, a modulation scheme used by the terminal, or a PUSCH resource used by the terminal.

After receiving the UE capability information message, the network device determines, based on the MPR information reported by the terminal device, MPR values respectively corresponding to the two waveforms in the currently used modulation scheme at the PUSCH resource location. Then, the waveform to be used for the PUSCH is determined based on one or more of the maximum transmit power capability of the terminal, the MPR value, the limit value, the quantity of transmit antennas used by the terminal, the networking mode used by the terminal, the power class, or the resource allocation mode.

803: The network device sends an RRC connection reconfiguration (RRC Connection Reconfiguration) message to the terminal, where the RRC connection reconfiguration message is used to indicate the waveform to be used for the PUSCH. For example, the RRC connection reconfiguration message may include waveform indication information, and the waveform indication information is used to indicate the waveform to be used for the PUSCH.

804: The terminal sends uplink information to the network device by using the waveform that is to be used for the PUSCH and that is indicated by the RRC connection reconfiguration message.

In some embodiments, in a random access process, the network device indicates, to the terminal by using a Msg2, the waveform to be used for the PUSCH. The waveform may be specified in the communications protocol. After the random access process is completed, the network device may determine, based on the MPR information, which waveform is used by the terminal to bring a relatively high transmit power gain of the terminal. For example, in a random access process, the waveform configured by the network device for the terminal by using the Msg2 is a first waveform (for example, the CP-OFDM waveform). After the random access process is completed, when the network device determines, based on the MPR information, that a power gain of a second waveform (for example, the DFT-s-OFDM waveform) is greater than that of the first waveform (CP-OFDM waveform), the network device determines that a waveform used for a current PUSCH is the first waveform. In this case, step 803 may be performed, to send an RRC connection reconfiguration message to the terminal to indicate the terminal to use the second waveform for a PUSCH. When the first waveform (CP-OFDM waveform) has no power gain, and the waveform used for the current PUSCH is the first waveform (CP-OFDM waveform), step 803 may not be performed, and the terminal continues to send the uplink information by using the first waveform (CP-OFDM waveform).

In some other embodiments, after the random access is completed, when the network device determines, based on the MPR information, that a power gain of the DFT-s-OFDM waveform is greater than that of the CP-OFDM waveform, step 803 is performed. In this embodiment, the network device may not determine whether the waveform used for the current PUSCH of the terminal is the CP-OFDM waveform, but indicate, by using the RRC connection reconfiguration message, the terminal to use the DFT-s-OFDM waveform for the PUSCH. When receiving the waveform that is to be used for the PUSCH and that is indicated by the network device by using the RRC connection reconfiguration message, the terminal sends the uplink information by using the DFT-s-OFDM waveform.

For example, a modulation scheme configured by the network device for the terminal is 256QAM, and a PUSCH resource location configured for the terminal is a location of an outer RB. With reference to Table 11, in this case, a gain of the DFT-s-OFDM waveform is greater than that of the waveform. Further, if the terminal device supports MIMO, for example, supports sending information by using two antennas, the network device may further determine whether a power gain of spatial multiplexing is greater than a power gain of using the DFT-s-OFDM waveform. For example, a networking mode currently corresponding to the terminal is NSA, and a resource allocation mode configured for the terminal is TDM. A maximum transmit power capability of the terminal is a sum of maximum transmit power of two antennas. In this case, a power gain brought by spatial multiplexing by using an MPR value is greater than a power gain brought by using the DFT-s-OFDM waveform. Therefore, using the CP-OFDM waveform helps improve uplink transmit performance and improve user experience.

In a possible manner, because the DFT-s-OFDM waveform supports only a single stream, when the CP-OFDM waveform is switched to the DFT-s-OFDM waveform, a sounding reference signal (sounding reference signal, SRS) resource, a port number, or a maximum antenna rank that is configured for the terminal is configured in a multi-antenna mode. Therefore, when the DFT-s-OFDM waveform supports only the single stream, if the sounding reference signal (sounding reference signal, SRS) resource, the SRS port (port), or the maximum antenna rank (maxRank) that is configured in the multi-antenna mode is still used, a waste of resources may be caused. Based on this, in this embodiment of this application, when it is determined that the waveform used for the PUSCH of the terminal is switched from the CP-OFDM waveform to the DFT-s-OFDM waveform, one or more of an SRS resource, an SRS port, or a maximum antenna rank may be reconfigured for the terminal by using an RRC connection reconfiguration message. In an example, the network device may reconfigure an SRS resource and/or an SRS port for the terminal by using an SRS configuration (SRS-Config) in an RRC connection reconfiguration message. For example, a quantity of ports used for a codebook (codebook) is configured to 1 from another value, and the port is a port 1. In another example, the network device may reconfigure a maximum antenna rank for the terminal by using PUSCH-Config in an RRC connection reconfiguration message. For example, the maximum antenna rank is reconfigured to 1. The SRS resource of the codebook is reconfigured as a single resource corresponding to the port 1, which may reduce SRS resource usage on a network. The SRS resource of the codebook is reconfigured as the port 1, which helps the terminal use a small cyclic delay diversity (small cyclic delay diversity, SCDD) transmission mode to increase SRS transmit power. The maxRank is reconfigured to 1, which also helps the terminal use the SCDD transmission mode to increase SRS transmit power.

A message of the PUSCH-Config field in the RRC connection reconfiguration message is as follows:

PUSCH-Config ::=                                        SEQUENCE {

```
                    dataScramblingIdentityPUSCH                    INTEGER (0..1023)
OPTIONAL,       -- Need S
                    txConfig                                       ENUMERATED {codebook,
nonCodebook}                    OPTIONAL,       -- Need S
                    dmrs-UplinkForPUSCH-MappingTypeA               SetupRelease { DMRS-
UplinkConfig }                    OPTIONAL,       -- Need M
                    dmrs-UplinkForPUSCH-MappingTypeB               SetupRelease { DMRS-
UplinkConfig }              OPTIONAL,       -- Need M
                    pusch-PowerControl                             PUSCH-PowerControl
OPTIONAL,       -- Need M
                    frequencyHopping                               ENUMERATED {intraSlot,
interSlot}                    OPTIONAL,       -- Need S
                    frequencyHoppingOffsetLists                    SEQUENCE (SIZE (1..4)) OF
INTEGER (1.. maxNrofPhysicalResourceBlocks-1)


OPTIONAL,       -- Need M
                    resourceAllocation                             ENUMERATED
{ resourceAllocationType0, resourceAllocationType1, dynamicSwitch},
                    pusch-TimeDomainAllocationList                 SetupRelease { PUSCH-
TimeDomainResourceAllocationList } OPTIONAL,       -- Need M
                    pusch-AggregationFactor                        ENUMERATED { n2, n4, n8 }
OPTIONAL,    -- Need S
                    mcs-Table                                      ENUMERATED {qam256,
qam64LowSE}                    OPTIONAL,       -- Need S
                    mcs-TableTransformPrecoder                     ENUMERATED {qam256,
qam64LowSE}                    OPTIONAL, -- Need S
                    transformPrecoder                              ENUMERATED {enabled,
disabled}                    OPTIONAL, -- Need S
                    codebookSubset                                 ENUMERATED
{fullyAndPartialAndNonCoherent, partialAndNonCoherent,nonCoherent}
```

OPTIONAL, -- Cond codebookBased

    maxRank                                          INTEGER (1..4)

OPTIONAL, -- Cond codebookBased

    rbg-Size                                    ENUMERATED { config2}

OPTIONAL, -- Need S

    uci-OnPUSCH                        SetupRelease { UCI-OnPUSCH}               OPTIONAL, -- Need M

    tp-pi2BPSK                             ENUMERATED {enabled}

OPTIONAL, -- Need S

    ...

    }

An SRS-related configuration in the RRC connection reconfiguration may alternatively be reconfigured, for example, in the following manner:

```
        SRS-ResourceSetId  ::=                              INTEGER  (0..maxNrofSRS-
ResourceSets-1)

        SRS-Resource ::=                                    SEQUENCE {
            srs-ResourceId                                      SRS-ResourceId,
            nrofSRS-Ports                                       ENUMERATED {port1, ports2,
ports4},

            ptrs-PortIndex                                      ENUMERATED  {n0,  n1  }
OPTIONAL,     -- Need R

            transmissionComb                                   CHOICE {
                n2                                                  SEQUENCE {
                    combOffset-n2                                       INTEGER (0..1),
                    cyclicShift-n2                                      INTEGER (0..7)
                },

                n4                                                  SEQUENCE {
                    combOffset-n4                                       INTEGER (0..3),
                    cyclicShift-n4                                      INTEGER (0..11)
                }
            },
```

```
        resourceMapping                          SEQUENCE {
            startPosition                            INTEGER (0..5),
            nrofSymbols                                  ENUMERATED {n1, n2,
n4},
            repetitionFactor                         ENUMERATED {n1, n2, n4}
        },
        freqDomainPosition                       INTEGER (0..67),
        freqDomainShift                          INTEGER (0..268),
        freqHopping                              SEQUENCE {
            c-SRS                                        INTEGER (0..63),
            b-SRS                                        INTEGER (0..3),
            b-hop                                        INTEGER (0..3)
        },
        groupOrSequenceHopping                       ENUMERATED { neither,
groupHopping, sequenceHopping },
        resourceType                             CHOICE {
            aperiodic                                SEQUENCE {
                ...
            },
            semi-persistent                      SEQUENCE {
                periodicityAndOffset-sp                              SRS-
PeriodicityAndOffset,
                ...
            },
            periodic                             SEQUENCE {
                periodicityAndOffset-p                               SRS-
PeriodicityAndOffset,
                ...
            }
        },
        sequenceId                               INTEGER (0..1023),
```

spatialRelationInfo                                    SRS-SpatialRelationInfo

OPTIONAL,      -- Need R

```
                    …

            }
```

In a possible implementation, when the network device indicates, to the terminal, a waveform to be used for a PUSCH in a first possible manner, the manner in step 803 is used. To be specific, the network device indicates, by sending an RRC connection reconfiguration message to the terminal, the waveform to be used for the PUSCH. In a second possible manner, the network device may directly indicate, to the terminal by using a downlink control message, a waveform to be used for a PUSCH. In other words, step 803 may be replaced with the following: The network device sends the downlink control message to the terminal, where the downlink control message indicates the waveform to be used for the PUSCH. For example, the downlink control message includes a waveform indication, and the waveform indication is used to indicate the waveform to be used for the PUSCH. In this case, step 804 may be replaced with the following: The terminal sends uplink information by using the waveform that is to be used for the PUSCH and that is indicated by the waveform indication. In a third possible manner, the network device may indirectly indicate, to the terminal by indicating a BWP to the terminal, a waveform to be used for a PUSCH. Different waveforms correspond to different BWPs. For example, after determining, for the terminal based on the MPR information, the waveform to be used for the PUSCH, the network device may determine a BWP corresponding to the waveform to be used for the PUSCH determined for the terminal, and then may send a downlink control message to the terminal. The downlink control message indicates a BWP to be used by the terminal to send uplink information. Further, when receiving the downlink control message, the terminal may determine, based on configuration information, the waveform that is to be used for the PUSCH and that corresponds to the BWP. The downlink control message may be a downlink control information (downlink control information, DCI) message.

It should be noted that the network device may alternatively indicate, to the terminal by using another signaling message or a signaling message that appears in the future, a waveform to be used for a PUSCH.

Waveform switching performed by using RRC signaling needs uplink and downlink signaling, which increases signaling overheads, and a delay of RRC signaling is long. However, BWP switching does not have signaling overheads, and a delay needs only several milliseconds, which is more than 1/10 of an RRC signaling delay. Therefore, compared with the manner of using the RRC signaling, the manner of using the BWP to indicate the waveform can reduce signaling overheads and reduce a delay.

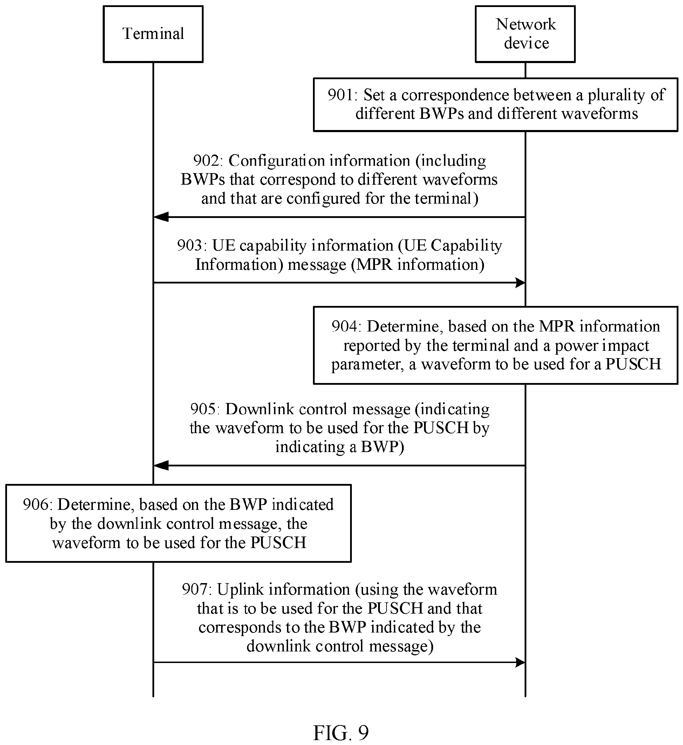

The following describes in detail the foregoing third possible manner with reference to FIG. 9.

FIG. 9 is a schematic flowchart of another waveform indication method according to an embodiment of this application.

901: A network device sets a correspondence between a plurality of different BWPs and different waveforms.

For example, the network device sets a correspondence between a CP-OFDM waveform and a BWP 1 and a correspondence between a DFT-s-OFDM waveform and a BWP 2. For another example, the network device sets a correspondence between a CP-OFDM waveform and a BWP 1, a correspondence between a CP-OFDM waveform and a BWP 3, a correspondence between a DFT-s-OFDM waveform and a BWP 2, and a correspondence between a DFT-s-OFDM waveform and a BWP 4.

902: Send configuration information to a terminal after the terminal is connected to a network, where the configuration information includes BWPs that correspond to different waveforms and that are configured for the terminal.

For example, the configuration information includes the BWP 1 and the BWP 2. The BWP 1 corresponds to the CP-OFDM waveform, and the BWP 2 corresponds to the DFT-s-OFDM waveform. For another example, the configuration information includes the BWP 1, the BWP 2, the BWP 3, and the BWP 4. The BWP 1 corresponds to the CP-OFDM waveform, the BWP 2 corresponds to the DFT-s-OFDM waveform, the BWP 3 corresponds to the CP-OFDM waveform, and the BWP 4 corresponds to the CP-OFDM waveform.

903: After the terminal is connected to the network, the terminal sends a UE capability information (UE Capability Information) message to the network device. The UE capability information message may include MPR information of the terminal.

A sequence of step 902 and step 903 is not specifically limited in this application. Step 902 may be performed before step 903, or step 903 may be performed before step 902.

In some embodiments, in a random access process, the network device indicates, to the terminal by using a Msg2, a waveform to be used for a PUSCH. The waveform may be specified in a communications protocol, for example, a first waveform. Further, the terminal sends the UE capability information message to the network device by using the first waveform indicated by the Msg2.

904: The network device determines, based on the MPR information reported by the terminal and a power impact parameter, the waveform to be used for the PUSCH. For how the network device determines, based on the MPR information, the waveform to be used for the PUSCH, refer to related descriptions in 802. Details are not described herein again.

In an example, if the UE capability information message does not include the MPR information, the waveform to be used for the PUSCH may be determined based on a default value of an MPR specified in the communications protocol and the power impact parameter.

905: The network device sends a downlink control message to the terminal, where the downlink control message indicates a BWP to be used by the terminal to send uplink information, that is, the waveform to be used for the PUSCH is indicated by indicating the BWP.

For example, the waveform to be used for the PUSCH that is determined by the network device is a second waveform, and the network device determines, based on the specified correspondence between different BWPs and different waveforms, a BWP corresponding to the second waveform. For example, the second waveform is the DFT-s-OFDM waveform, and the second waveform corresponds to the BWP 2 in the BWPs configured for the terminal. In other words, the second waveform is an uplink waveform configured for the BWP 2. The network device indicates the terminal to switch to the BWP 2 to send the uplink information, that is, indicates the terminal to send the uplink information by using the DFT-s-OFDM waveform.

906: The terminal receives the downlink control message, and determines, based on the BWP indicated by the downlink control message, the waveform to be used for the PUSCH. For example, the BWP indicated by the downlink control information is the BWP 2, the terminal determines, based on the configuration information, that a waveform corresponding to the BWP 2 is the DFT-s-OFDM waveform, and the terminal determines that the waveform to be used for the PUSCH is the DFT-s-OFDM waveform.

The downlink control message may be a downlink control information (downlink control information, DCI) message. A 5G protocol introduces a concept of a BWP. According to the protocol, a plurality of BWPs may be configured for a same cell. Each BWP has different uplink and downlink pre-configuration parameters. Different BWPs may have dynamic switching based on a DCI message carried on a physical downlink control channel (physical downlink control channel, PDCCH). If PUSCH configuration (PUSCH-config) messages corresponding to different BWP configurations correspond to different transformPrecoder field parameters, switching between the DFT-s-OFDM waveform and the CP-OFDM waveform is implicitly performed during BWP switching.

In some embodiments, in the random access process, the network device indicates, to the terminal by using the Msg2, the waveform to be used for the PUSCH. The waveform may be specified in the communications protocol. After the random access process is completed, the network device may determine, based on the MPR information, which waveform is used by the terminal to bring a relatively high transmit power gain of the terminal. For example, in the random access process, the waveform configured by the network device for the terminal by using the Msg2 is the first waveform (for example, the CP-OFDM waveform). After the random access process is completed, when the network device determines, based on the MPR information, that a power gain of the second waveform (for example, the DFT-s-OFDM waveform) is greater than that of the first waveform (CP-OFDM waveform), the network device determines that a waveform used for a current PUSCH is the first waveform. In this case, step 905 may be performed, to send an RRC connection reconfiguration message to the terminal to indicate the terminal to use the second waveform for a PUSCH. When the first waveform (CP-OFDM waveform) has no power gain, and the waveform used for the current PUSCH is the first waveform (CP-OFDM waveform), step 905 may not be performed, and the terminal continues to send the uplink information by using the first waveform (CP-OFDM waveform).

In some other embodiments, after the random access is completed, when the network device determines, based on the MPR information, that a power gain of the DFT-s-OFDM waveform is greater than that of the CP-OFDM waveform, step 905 may be performed. In this embodiment, the network device may not determine whether the waveform used for the current PUSCH of the terminal is the CP-OFDM waveform. When the terminal determines, based on the BWP indicated by the downlink control message, that the waveform used for the PUSCH is the CP-OFDM waveform, the terminal sends the uplink information by using the CP-OFDM waveform.

907: The terminal sends the uplink information by using the waveform that is to be used for the PUSCH and that corresponds to the BWP indicated by the downlink control message. It should be noted that after determining, based on the downlink control message, the waveform to be used for the PUSCH, the terminal may use the waveform when subsequently sending uplink information by using the PUSCH, until another waveform indicated by the network device is received. The uplink information may include an RRC connection establishment complete message, an RRC connection complete message, and other subsequent uplink information (for example, uplink data).

In a possible implementation, when the terminal does not send the MPR information to the network device, the network device may use, as maximum MPRs of the terminal, MPR values in different PUSCH resources and different modulation schemes that are specified in the protocol, to determine, for the terminal, the waveform to be used for the PUSCH. In a manner, the waveform to be used for the PUSCH is determined in the manner of determining power gains of different waveforms described in the embodiment corresponding to FIG. 8. Details are not described herein again. In another manner, the network device may configure mapping relationships between different power impact parameters and a waveform to be used for a PUSCH of the terminal in the manner of determining power gains of different waveforms in the embodiment corresponding to FIG. 8. For example, the power impact parameter may include one or more of a networking mode of the terminal, a quantity of transmit antennas on the terminal, a maximum transmit power capability of the terminal, a resource allocation mode, or a PUSCH modulation scheme (or a distance between the terminal and the network device). For example, for the mapping relationship, refer to Table 12.

**Table 12**

| Networking mode | Power class | Whether MIMO is supported | Allocation mode | Maximum transmit power capability of a terminal | Whether limited by a maximum transmit power specified in a protocol | Limit value (dB) | Cell center | Point near the cell center (256QAM/64QAM) | Point having a medium distance from the cell center (16QAM) | Cell edge (QPSK) |
|---|---|---|---|---|---|---|---|---|---|---|
| NSA | PC 3 | No (1T2R/1T4R) | Mode 1 (semi-static mode) | 23 | Limited | 3 | CP-ODFM | DFT-s-OFDM | CP-ODFM | CP-ODFM |
| | | | Mode 2 (TDM) | 23 | Not limited | 0 | CP-ODFM | DFT-s-OFDM | DFT-s-OFDM | DFT-s-OFDM |
| | | | Mode 3 (dynamic power sharing mode) | 23 | Not limited | 0 | CP-ODFM | DFT-s-OFDM | DFT-s-OFDM | DFT-s-OFDM |
| | | Yes (2T4R) | Mode 1 | 23+23 | Limited | 6 | CP-ODFM | CP-ODFM | CP-ODFM | CP-ODFM |
| | | | Mode 2 | 23+23 | Limited | 3 | CP-ODFM | CP-ODFM | CP-ODFM | CP-ODFM |
| | | | Mode 3 | 23+23 | Limited | 3 | CP-ODFM | CP-ODFM | CP-ODFM | CP-ODFM |
| | PC 2 | No (1T2R/1T4R) | Mode 1 | 23 | Not limited | 0 | CP-ODFM | DFT-s-OFDM | DFT-s-OFDM | DFT-s-OFDM |
| | | | Mode 1 | 26 | Limited | 3 | CP-OFD | DFT-s-OFDM | CP-OFDM | CP-OFD |

| Networking mode | Power class | Whether MIMO is supported | Allocation mode | Maximum transmit power capability of a terminal | Whether limited by a maximum transmit power specified in a protocol | Limit value (dB) | Cell center | Point near the cell center (256QAM/64QAM) | Point having a medium distance from the cell center (16QAM) | Cell edge (QPSK) |
|---|---|---|---|---|---|---|---|---|---|---|
| | | | | | | | M | | | M |
| | | | Mode 2 | 23 | Not limited | 0 | CP-ODFM | DFT-s-OFDM | DFT-s-OFDM | DFT-s-OFDM |
| | | | Mode 3 | 23 | Not limited | 0 | CP-ODFM | DFT-s-OFDM | DFT-s-OFDM | DFT-s-OFDM |
| | | Yes (2T4R) | Mode 1 | 23+23 | Limited | 3 | CP-ODFM | CP-ODFM | CP-ODFM | CP-ODFM |
| | | | Mode 1 | 26+23 | Limited | 6/3 | CP-ODFM | CP-ODFM | CP-ODFM | CP-ODFM |
| | | | Mode 1 | 26+26 | Limited | 6 | CP-ODFM | CP-ODFM | CP-ODFM | CP-ODFM |
| | | | Mode 2 | 23+23 | Not limited | 0 | CP-ODFM | CP-ODFM | DFT-s-OFDM | DFT-s-OFDM |
| | | | Mode 2 | 26+23 | Partially limited | 3/0 | CP-ODFM | CP-ODFM | CP-ODFM | DFT-s-OFDM |
| | | | Mode 2 | 26+26 | Limited | 3 | CP-ODFM | CP-ODFM | CP-ODFM | CP-ODFM |
| | | | Mode 3 | 26+26 | Limited | 3 | CP-ODFM | CP-ODFM | CP-ODFM | CP-ODFM |

EP 4 192 105 A1

36

| Net working mod e | Pow er class | Whethe r MIMO is support ed | Allocatio n mode | Maximu m transmit power capabilit y of a terminal | Whether limited by a maximum transmit power specified in a protocol | Limit value (dB) | Cell center | Point near the cell center (256QAM/ 64QAM) | Point having a medium distance from the cell center (16QAM) | Cell edge (QPS K) |
|---|---|---|---|---|---|---|---|---|---|---|
| | | | Mode 3 | 26+23 | Partially limited | 3/0 | CP-ODF M | CP-ODFM | CP-ODFM | DFT-s-OFD M |
| | | | Mode 3 | 23+23 | Not limited | 0 | CP-ODF M | CP-ODFM | DFT-s-OFDM | DFT-s-OFD M |
| SA | PC 3 | No (1T2R/ 1T4R) | | 23 | Not limited | 0 | CP-ODF M | DFT-s-OFDM | DFT-s-OFDM | DFT-s-OFD M |
| | | No (1T2R/ 1T4R) | | 26 | Limited | 3 | CP-ODF M | DFT-s-OFDM | CP-ODFM | CP-ODF M |
| | | Yes (2T4R) | | 23+23 | Limited | 3 | CP-ODF M | CP-ODFM | CP-ODFM | CP-ODF M |
| | PC 2 | No (1T2R/ 1T4R) | | 26 | Not limited | 0 | CP-ODF M | DFT-s-OFDM | DFT-s-OFDM | DFT-s-OFD M |
| | | Yes (2T4R) | | 26+26 | Limited | 3 | CP-ODF M | CP-ODFM | CP-ODFM | CP-ODF M |
| | | Yes (2T4R) | | 23+26 | Partially limited | 0/3 | CP-ODF M | CP-ODFM | CP-ODFM | DFT-s-OFD M |
| | | Yes (2T4R) | | 23+23 | Not limited | 0 | CP-ODF M | CP-ODFM | DFT-s-OFDM | DFT-s-OFD M |

EP 4 192 105 A1

In some embodiments, when the terminal is attached to the network, the network device obtains the capability information of the terminal. The capability information may include one or more of a networking mode of the terminal, a quantity of transmit antennas of the terminal, a maximum transmit power capability of the terminal, and a resource allocation mode. In a random access process, the network device configures, for the terminal, a resource used for the PUSCH and a modulation scheme of the PUSCH. Optionally, after the terminal is attached to the network, the network device configures, for the terminal based on the capability information of the terminal, the resource that is used for the PUSCH and that is configured for the terminal, the modulation scheme of the PUSCH resource, and the mapping relationship, the waveform to be used for the PUSCH. After configuring the waveform to be used for the PUSCH for the terminal, the network device indicates, to the terminal, the waveform to be used for the PUSCH.

In some embodiments, when determining that a parameter value of the power impact parameter of the terminal changes, the network device may determine, for the terminal based on the MPR information and the changed power impact parameter, the waveform to be used for the PUSCH. For example, to avoid ping-pong transform switching of the terminal, the network device may determine, based on a hysteresis threshold, an occasion for determining, for the terminal based on the MPR information and the changed power impact parameter, the waveform to be used for the PUSCH. For example, after sending a first message to the terminal, the network device determines whether the parameter value of the power impact parameter of the terminal changes after duration indicated by the hysteresis threshold, and then determines, for the terminal based on the MPR information and the changed power impact parameter, the waveform to be used for the PUSCH. For another example, the terminal device may determine, based on the hysteresis threshold, whether to perform switching again. For example, after receiving the first message sent by the network device, the terminal receives, again when a time period passed by does not reach the hysteresis threshold, a message used to indicate the waveform to be used for the PUSCH, and the terminal may delay waveform switching. After the terminal receives the first message, when a time period passed by reaches the hysteresis threshold, the terminal may perform a waveform switching operation. For another example, after receiving the first message sent by the network device, the terminal receives, again when a time period passed by does not reach the hysteresis threshold, a message used to indicate the waveform to be used for the PUSCH, and the terminal may discard the re-received message used to indicate the waveform to be used for the PUSCH.

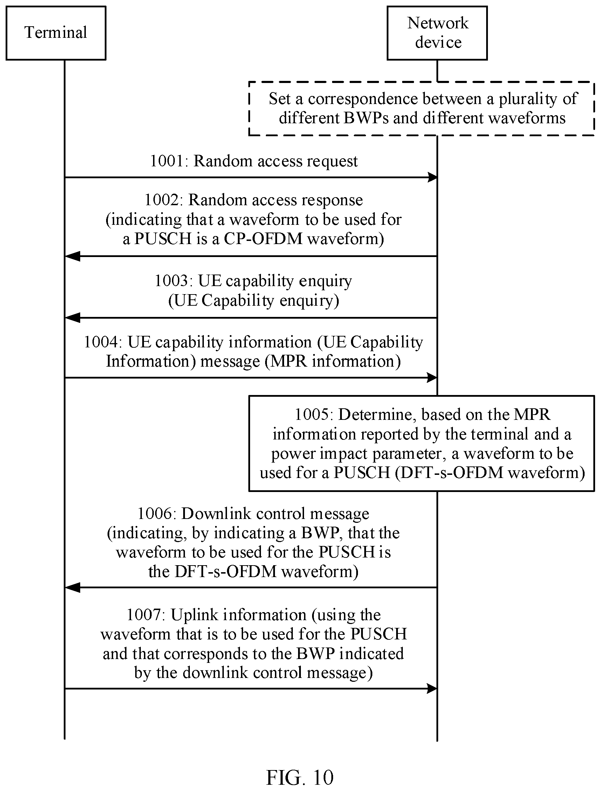

With reference to a specific application scenario, the following describes in detail, by using an example, the foregoing implementation in which a network device indicates, to a terminal based on MPR information reported by the terminal, a waveform to be used for a PUSCH. Refer to FIG. 10. In FIG. 10, an example in which a network device indicates, to a terminal by using an RRC connection reconfiguration message, a waveform to be used for a PUSCH is used.

1001: The terminal device sends a random access request to the network device. For example, the random access request is used to initiate a contention-based random access process.

For example, the terminal may send the random access request to the network device after receiving first indication information of the network device. The first indication information is used to indicate the terminal to initiate the contention-based random access process. For another example, the terminal may alternatively send the random access request to the network device during initial access. For example, the terminal may trigger the initial access when the terminal is powered on or an airplane mode is disabled. For another example, the terminal may alternatively send the random access request to the network device during cell handover. Alternatively, the terminal sends the random access request to the network device during uplink asynchronization, RRC connection reestablishment, transition from RRC_INACTIVE, or the like.

It should be noted that the foregoing descriptions are merely an example in which the terminal is triggered to send the random access request to the network device, and are not intended to constitute a limitation in which the terminal is triggered to send the random access request to the network device in this embodiment of this application. In this embodiment of this application, the terminal may be alternatively triggered, in another manner, to send the random access request to the network device.

1002: After receiving the random access request from the terminal, the network device sends a random access response (RAR) to the terminal. For example, the random access response is used to indicate that a waveform to be used for a PUSCH is a first waveform, for example, a CP-OFDM waveform.

For example, the random access response includes waveform indication information of the PUSCH. The waveform information of the PUSCH is used to indicate the CP-OFDM waveform. Further, an RAR may include PUSCH modulation information and PUSCH resource information. The PUSCH modulation information is used to indicate a PUSCH modulation scheme, and the PUSCH resource information is used to indicate a location and a size of a PUSCH resource.

It should be noted that the random access request may be a Msg1 or a MsgA. For example, when the random access request is the Msg1, the random access response is a Msg2. For another example, when the random access request is the MsgA, the random access response is a MsgB.

It should be understood that when a wireless communications system supports only one waveform, the network device may not indicate, to the terminal, a waveform to be used for a PUSCH. For example, a waveform supported in LTE is DTF-s-OFDM. For the terminal, the network device may not indicate, to the terminal, the waveform to be used for the PUSCH, and the terminal may determine, by default, that the waveform to be used for the PUSCH is DFT-s-OFDM. Further, when the terminal supports a plurality of waveforms, for example, in NR, when the terminal supports two waveforms CP-OFDM and DFT-s-OFDM, the network device indicates, to the terminal by default, that the waveform to be used for the PUSCH is the CP-OFDM waveform.

1003: After the random access is completed, the network device sends a UE capability enquiry to the terminal. The UE capability enquiry is used to request to enquire capability information of the terminal.

1004: The terminal sends a LTE capability information (LTE Capability Information) message to the network device by using the first waveform. The LTE capability information message includes at least MPR information of the terminal. For details, refer to step 801. Details are not described herein again.

1005: The network device may determine, based on the MPR information and a power impact parameter that can affect uplink transmit power, that a waveform to be used for a PUSCH is a second waveform, for example, the DFT-s-OFDM waveform.

In some embodiments, the network device may estimate, based on the MPR information and the power impact parameter that can affect the uplink transmit power, which waveform is used by the terminal to bring a relatively high transmit power gain of the terminal. In this embodiment, the DFT-s-OFDM waveform has a transmit power gain in comparison with the CP-OFDM waveform.

Specifically, for how to determine, based on the MPR information and the power impact parameter that can affect the uplink transmit power, the waveform to be used for the PUSCH, refer to related descriptions of step 802. Details are not described herein again.

S 1006: The network device sends a message 1 to the terminal. The message 1 indicates that the waveform to be used for the PUSCH is the DFT-s-OFDM waveform. The message 1 may be an RRC connection reconfiguration message. The RRC connection reconfiguration message includes waveform indication information, and the waveform indication information is used to indicate that the waveform to be used for the PUSCH is the DFT-s-OFDM waveform. Alternatively, the message 1 is a downlink control message. The downlink control message indicates a BWP used by the terminal, and the BWP indicates that the waveform to be used for the PUSCH is the DFT-s-OFDM waveform. The message 1 may alternatively be another protocol message. In FIG. 10, the downlink control message is used as an example.

In some embodiments, in a random access process in the NR, the network device indicates, to the terminal by using the Msg2, that the waveform to be used for the PUSCH is the CP-OFDM waveform. After the random access process is completed, the network device determines, based on the MPR information, that a power gain of the DFT-s-OFDM waveform is greater than that of the CP-OFDM waveform, and determines that a waveform used for a current PUSCH of the terminal is the CP-OFDM waveform. In this case, the network device sends the RRC connection reconfiguration message to the terminal to indicate that the waveform to be used for the PUSCH is the DFT-s-OFDM waveform. When the network device determines, based on the MPR information, that the DFT-s-OFDM waveform has no power gain in comparison with the CP-OFDM waveform, and a waveform used for a current PUSCH is the CP-OFDM waveform, 1006 may not be performed. In some other embodiments, when the network device determines, based on the MPR information, that a power gain of the DFT-s-OFDM waveform is greater than that of the CP-OFDM waveform, the network device may not determine a waveform used for a current PUSCH of the terminal device, but directly send the RRC connection reconfiguration message to the terminal to indicate that the waveform to be used for the PUSCH is the DFT-s-OFDM waveform.

1007: The terminal sends uplink information to the network device by using the DFT-s-OFDM waveform. For details, refer to related descriptions in step 804. Details are not described herein again.

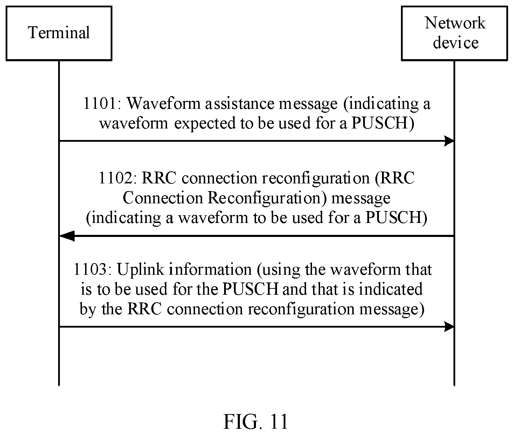

FIG. 11 shows another possible waveform indication method according to an embodiment of this application. A solution described in FIG. 10 may be summarized as follows: A terminal reports, to a network device, a waveform expected to be used for a PUSCH, so that the network device indicates, to the terminal, a waveform to be used for the PUSCH.

1101: The terminal sends a waveform assistance message to the network device, where the waveform assistance message is used to indicate a waveform expected to be used for a PUSCH of the terminal.

In some embodiments, when a distance range between the terminal and the network device changes, a path loss is relatively large, or an amount of to-be-sent data on the terminal increases, the terminal may be triggered to determine gains of transmit power of a waveform used for a current PUSCH and transmit power of another supported waveform, to determine whether to switch the waveform used for the current PUSCH. For example, when it is determined that a gain of a currently used CP-OFDM waveform is less than a gain of a DFT-s-OFDM waveform, a waveform assistance message may be sent to the network device, where the waveform assistance message indicates that the waveform expected to be used for the PUSCH of the terminal is the DFT-s-OFDM waveform.

In some embodiments, after completing a random access process, the terminal receives, by using a Msg2, a waveform that is to be used for the PUSCH and that is indicated by the network device. For example, when the waveform that is to be used for the PUSCH and that is indicated by the network device by using the Msg2 is a first waveform, for example, the CP-OFDM waveform, the terminal may send the waveform assistance message to the network device by using the CP-OFDM waveform. Further, when a distance range between the terminal and a base station changes, a path loss is relatively large, an amount of to-be-sent data on the terminal increases, or a loss of the terminal device is relatively large, the terminal may be triggered to determine gains of transmit power of the currently used CP-OFDM waveform and the DFT-s-OFDM waveform, to determine whether to switch to use the DFT-s-OFDM to send uplink information.

In a manner, whether to perform waveform switching may be determined by using the manner of determining a waveform switching gain described in the embodiment corresponding to FIG. 8.

In another manner, mapping relationships between different parameters and a waveform to be used for a PUSCH of the terminal are configured in the terminal. The parameter may include one or more of a networking mode of the terminal, a quantity of transmit antennas of the terminal, a maximum transmit power capability of the terminal, a resource allocation mode, or a PUSCH modulation scheme (or a distance between the terminal and the network device). For example, for the mapping relationship, refer to Table 12. The mapping relationship may be configured by the network device for the terminal, or may be specified in a communications protocol.

In some embodiments, the waveform assistance message may reuse an assistance message provided in the current communications protocol. For example, the assistance message includes the following information:

```
-- ASN1START

-- TAG-UEASSISTANCEINFORMATION-START

UEAssistanceInformation ::=          SEQUENCE {

     criticalExtensions                  CHOICE {

          ueAssistanceInformation            UEAssistanceInformation-IEs,

          criticalExtensionsFuture           SEQUENCE {}

     }

}

UEAssistanceInformation-IEs ::=   SEQUENCE {

     delayBudgetReport                   DelayBudgetReport
OPTIONAL,

     lateNonCriticalExtension            OCTET STRING
OPTIONAL,

     nonCriticalExtension                UEAssistanceInformation-v1540-IEs
OPTIONAL

     }

DelayBudgetReport::=          CHOICE {

     type1                              ENUMERATED {

                                         msMinus1280, msMinus640,

msMinus320, msMinus160, msMinus80, msMinus60, msMinus40,
```

```
                                                    msMinus20, ms0, ms20, ms40,

ms60, ms80, ms160, ms320, ms640, ms1280},

                ...

        }

        UEAssistanceInformation-v1540-IEs ::= SEQUENCE {

                overheatingAssistance                OverheatingAssistance

OPTIONAL,

                nonCriticalExtension                SEQUENCE {}

OPTIONAL

        }

        OverheatingAssistance ::=        SEQUENCE {

            reducedMaxCCs                        SEQUENCE {

                reducedCCsDL                        INTEGER (0..31),

                reducedCCsUL                        INTEGER (0..31)

            } OPTIONAL,

            reducedMaxBW-FR1                SEQUENCE {

                reducedBW-FR1-DL

ReducedAggregatedBandwidth,

                reducedBW-FR1-UL

ReducedAggregatedBandwidth

            } OPTIONAL,

            reducedMaxBW-FR2                SEQUENCE {

                reducedBW-FR2-DL

ReducedAggregatedBandwidth,

                reducedBW-FR2-UL

ReducedAggregatedBandwidth

            } OPTIONAL,

            reducedMaxMIMO-LayersFR1                SEQUENCE {

                reducedMIMO-LayersFR1-DL                MIMO-LayersDL,

                reducedMIMO-LayersFR1-UL                MIMO-LayersUL

            } OPTIONAL,
```

```
reducedMaxMIMO-LayersFR2                SEQUENCE {
    reducedMIMO-LayersFR2-DL                MIMO-LayersDL,
    reducedMIMO-LayersFR2-UL                MIMO-LayersUL
} OPTIONAL
}
ReducedAggregatedBandwidth ::= ENUMERATED {mhz0, mhz10, mhz20, mhz30,
mhz40, mhz50, mhz60, mhz80, mhz100, mhz200, mhz300, mhz400}
-- TAG-UEASSISTANCEINFORMATION-STOP
-- ASN1STOP
```

For example, the waveform assistance message may use a format shown in the following UEAssistanceInformation-vxxx-IEs:

```
UEAssistanceInformation-vxxx-IEs ::= SEQUENCE {
    overheatingAssistance               OverheatingAssistance
OPTIONAL,
    nonCriticalExtension                SEQUENCE {}
OPTIONAL
    waveformAssistance                  waveformAssistance
OPTIONAL
}
waveformAssistance::=               SEQUENCE {
    preferWaveform                          ENUMERATED {DFT-s-OFDM,CP-
OFDM} OPTIONAL
}
```

1102: After receiving the waveform assistance message, the network device sends an RRC connection reconfiguration message to the terminal, where the RRC connection reconfiguration (RRC Connection Reconfiguration) message is used to indicate the waveform to be used for the PUSCH. For example, the RRC connection reconfiguration message may include waveform indication information, and the waveform indication information is used to indicate the waveform to be used for the PUSCH. For example, the waveform that is to be used for the PUSCH and that is indicated by the waveform indication information is the waveform that is expected to be used for the PUSCH and that is reported by the terminal by using the waveform assistance message.

1103: The terminal receives the RRC connection reconfiguration message from the network device, and the terminal sends uplink information to the network device by using the waveform that is to be used for the PUSCH and that is indicated by the RRC connection reconfiguration message.

For example, a modulation scheme configured by the network device for the terminal is 256QAM, and a PUSCH resource location configured for the terminal is an outer RB. With reference to Table 11, in this case, a gain of the DFT-s-OFDM waveform is greater than that of the waveform. Further, if the terminal device supports MIMO, for example, supports sending information by using two antennas, the terminal may further determine whether a power gain of spatial multiplexing is greater than a power gain of using the DFT-s-OFDM waveform. For example, a networking mode currently corresponding to the terminal is NSA, and a resource allocation mode configured by the network device for the terminal is TDM. A maximum transmit power capability of the terminal is a sum of maximum transmit power of two antennas. In this case, a power gain brought by spatial multiplexing by using an MPR value is greater than a power gain brought by using the DFT-s-OFDM waveform. Therefore, using the CP-OFDM waveform helps improve uplink transmit performance and improve user experience.

In a possible manner, because the DFT-s-OFDM waveform supports only a single stream, when the terminal device needs to switch from the CP-OFDM waveform to the DFT-s-OFDM waveform, the network device may further configure a sounding reference signal (sounding reference signal, SRS) resource, a port number, or a maximum antenna rank for the terminal in a multi-antenna mode. Therefore, when the DFT-s-OFDM waveform supports only the single stream, if the sounding reference signal (sounding reference signal, SRS) resource, the SRS port (port), or the maximum antenna rank (maxRank) that is configured in the multi-antenna mode is still used, a waste of resources may be caused. Based on this, in this embodiment of this application, when determining that the waveform that is to be used for the PUSCH and that is reported by the terminal by using the waveform assistance message is the DFT-s-OFDM waveform, the network device may reconfigure the one or more of the SRS resource, the SRS port, or the maximum antenna rank for the terminal. For example, the network device may configure one or more of an SRS resource, an SRS port, or a maximum antenna rank for the terminal by using an RRC connection reconfiguration message. For example, the network device may send, to the terminal by using different RRC connection reconfiguration messages, the one or more of the SRS resource, the SRS port, or the maximum antenna rank and the waveform to be used for the PUSCH. For another example, the network device may send, to the terminal by using a same RRC connection reconfiguration message, the one or more of the SRS resource, the SRS port, or the maximum antenna rank and the waveform to be used for the PUSCH. In other words, the RRC connection reconfiguration message in step 1102 may further include the one or more of the SRS resource, the SRS port, or the maximum antenna rank.

In an example, the network device may reconfigure an SRS resource and/or an SRS port for the terminal by using an SRS configuration (SRS-Config) in an RRC connection reconfiguration message. For example, a quantity of ports used for a codebook (codebook) is configured to 1 from another value, and the port is a port 1. In another example, the network device may reconfigure a maximum antenna rank for the terminal by using PUSCH-Config in an RRC connection reconfiguration message. For example, the maximum antenna rank is reconfigured to 1. The SRS resource of the codebook is reconfigured as a single resource corresponding to the port 1, which may reduce SRS resource usage on a network. The SRS resource of the codebook is reconfigured as the port 1, which helps the terminal use an SCDD transmission mode to increase SRS transmit power. The maxRank is reconfigured to 1, which also helps the terminal use the SCDD transmission mode to increase SRS transmit power.

In a possible implementation, when the network device indicates, to the terminal, a waveform to be used for a PUSCH in a first possible manner, the manner in step 1102 is used. To be specific, the network device indicates, by sending an RRC connection reconfiguration message to the terminal, the waveform to be used for the PUSCH. In a second possible manner, the network device may directly indicate, to the terminal by using a downlink control message, a waveform to be used for a PUSCH. In other words, step 1102 may be replaced with the following: The network device sends the downlink control message to the terminal, where the downlink control message indicates the waveform to be used for the PUSCH. For example, the downlink control message includes a waveform indication, and the waveform indication is used to indicate the waveform to be used for the PUSCH. In this case, step 1103 may be replaced with the following: The terminal sends uplink information by using the waveform that is to be used for the PUSCH and that is indicated by the waveform indication. In a third possible manner, the network device may indirectly indicate, to the terminal by indicating a BWP to the terminal, a waveform to be used for a PUSCH. Different waveforms correspond to different BWPs. For example, after determining, for the terminal based on the MPR information, the waveform to be used for the PUSCH, the network device may determine a BWP corresponding to the waveform to be used for the PUSCH determined for the terminal, and then may send a downlink control message to the terminal. The downlink control message indicates a BWP to be used by the terminal to send uplink information. Further, when receiving the downlink control message, the terminal may determine, based on configuration information, the waveform that is to be used for the PUSCH and that corresponds to the BWP. The downlink control message may be a downlink control information (downlink control information, DCI) message.

It should be noted that the network device may alternatively indicate, to the terminal by using another signaling message or a signaling message that appears in the future, a waveform to be used for a PUSCH.

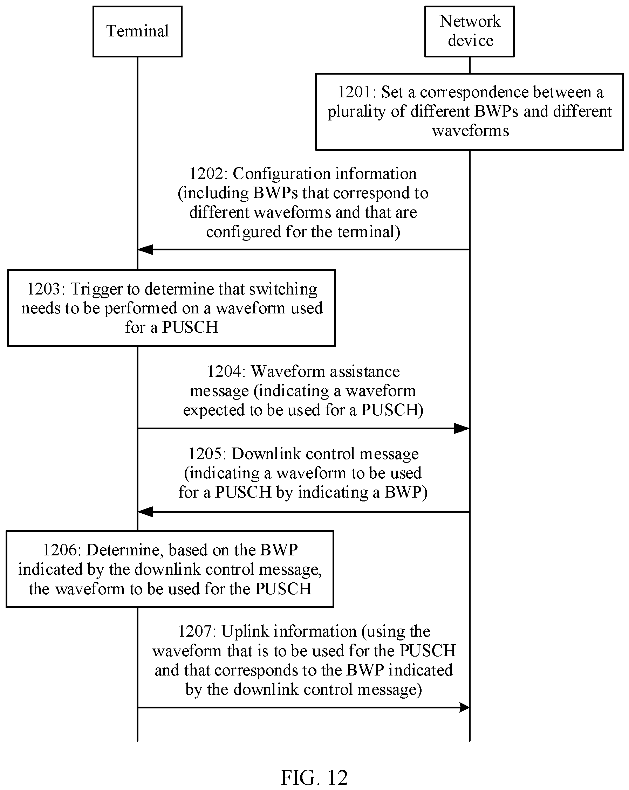

The following describes in detail the foregoing third possible manner with reference to FIG. 12.

For 1201 to 1202, refer to 901 to 902. Details are not described again.

1203: After the terminal is connected to a network, the terminal may be triggered, when a distance range between the terminal and a base station changes, a path loss is relatively large, an amount of to-be-sent data on the terminal increases, or the like, to determine whether switching needs to be performed on a waveform used for a PUSCH. When it is triggered to determine that the waveform used for the PUSCH needs to be switched, step 1004 is performed.

For example, that a distance between the terminal and the network device changes may be that the distance between the terminal and the network device increases to a length threshold. That a path loss is relatively large may mean, for example, that the terminal determines that the path loss reaches a path loss threshold. That an amount of to-be-sent data on the terminal increases may be, for example, a percentage of an increase in the amount of to-be-sent data on the terminal reaches a percentage threshold.

1204: The terminal sends a waveform assistance message to the network device, where the waveform assistance message is used to indicate a waveform expected to be used for a PUSCH of the terminal. For related descriptions of the waveform assistance message, refer to the related descriptions of step 1101. Details are not described herein again.

In some embodiments, after completing a random access process, the terminal receives, by using a Msg2, a waveform that is to be used for the PUSCH and that is indicated by the network device. For example, when the waveform that is to be used for the PUSCH and that is indicated by the network device by using the Msg2 is a CP-OFDM waveform, the terminal may send the waveform assistance message to the network device by using the CP-OFDM waveform.

Further, when a distance range between the terminal and a base station changes, a path loss is relatively large, or an amount of to-be-sent data on the terminal increases, the terminal may be triggered to determine gains of transmit power of a currently used CP-OFDM waveform and a DFT-s-OFDM waveform, to determine whether to switch to use the DFT-s-OFDM waveform to send uplink information. For example, when it is determined that the gain of the currently used CP-OFDM waveform is less than the gain of transmit power of the DFT-s-OFDM waveform, the waveform assistance message sent to the network device indicates that the waveform expected to be used for the PUSCU of the terminal is the DFT-s-OFDM waveform.

1205: After receiving the waveform assistance message from the terminal, the network device sends a downlink control message to the terminal, where the downlink control message indicates a BWP used by the terminal to send uplink data. In an example, the waveform that is expected to be used for the PUSCH and that is reported by the terminal is the DFT-s-OFDM waveform, and a BWP that is used by the terminal to send uplink data and that is indicated by the downlink control message is a BWP 2. There is a correspondence between the BWP 2 and the DFT-s-OFDM waveform.

1206: The terminal receives the downlink control message, and determines, based on the BWP indicated by the downlink control message, the waveform to be used for the PUSCH, for example, the DFT-s-OFDM waveform. For example, the terminal determines, based on configuration information, that a waveform corresponding to the BWP 2 is the DFT-s-OFDM waveform, and the terminal determines that the waveform to be used for the PUSCH is the DFT-s-OFDM waveform. For details, refer to 906. Details are not described herein again.

1207: The terminal sends the uplink information by using the waveform that is to be used for the PUSCH and that corresponds to the BWP indicated by the downlink control message. For details, refer to 907. Details are not described herein again.

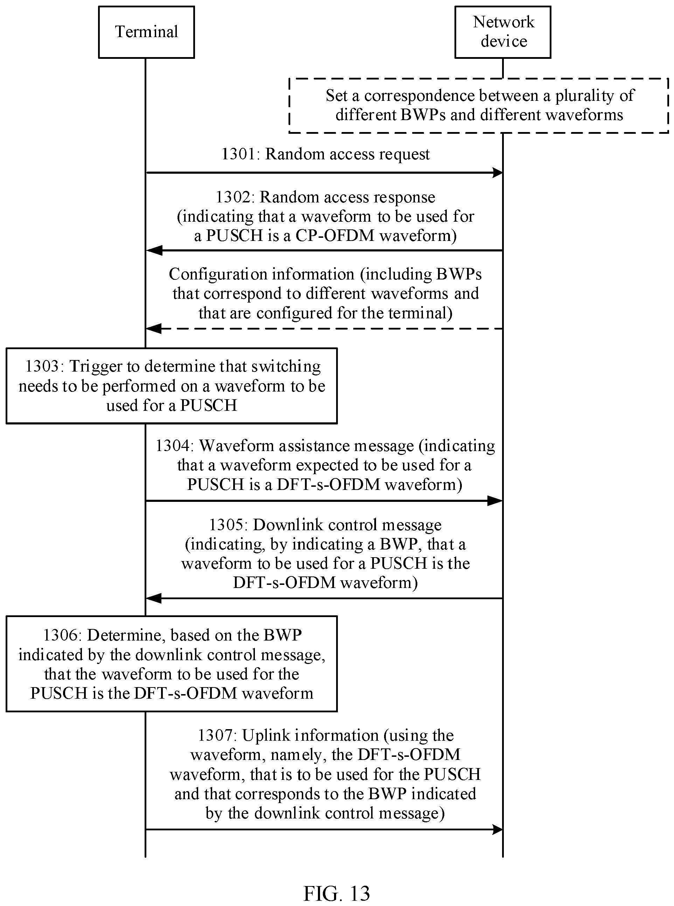

With reference to a specific application scenario, the following describes in detail, by using an example, the foregoing implementation in which a network device indicates, based on a waveform that is expected to be used for a PUSCH and that is reported by the terminal, a waveform to be used for a PUSCH. Refer to FIG. 13. In FIG. 13, an example in which a network device indicates, to a terminal by using a downlink control message, a waveform to be used for a PUSCH is used.

1301: The terminal device sends a random access request to the network device. For example, the random access request is used to initiate a contention-based random access process. For details, refer to step 1001. Details are not described herein again.

For example, before the terminal sends the random access request to the network device, the network device may set a correspondence between a plurality of different BWPs and different waveforms. For details, refer to related descriptions in step 901. Details are not described herein again.

1302: After receiving the random access request from the terminal, the network device sends a random access response (RAR) to the terminal. For example, the random access response is used to indicate that a waveform to be used for a PUSCH is a CP-OFDM waveform. For details, refer to S 1002. Details are not described herein again.

1303: After the random access is completed, the terminal may be triggered, when a distance range between the terminal and a base station changes, a path loss is relatively large, an amount of to-be-sent data on the terminal increases, or the like, to determine whether switching needs to be performed on a waveform used for a PUSCH. When it is triggered to determine that the waveform used for the PUSCH needs to be switched, step 1304 is performed. In an example, it is determined that the waveform used for the PUSCH needs to be switched to a DFT-s-OFDM waveform.

For example, after the random access is completed, the network device sends configuration information to the terminal, where the configuration information includes BWPs that correspond to different waveforms and that are configured for the terminal. For details, refer to step 902. Details are not described herein again.

1304: The terminal sends a waveform assistance message to the network device by using the CP-OFDM waveform, where the waveform assistance message is used to indicate a waveform expected to be used for a PUSCH of the terminal. The waveform expected to be used for the PUSCH of the terminal is the DFT-s-OFDM waveform. For related descriptions of the waveform assistance message, refer to the related descriptions of step 1101. Details are not described herein again.

1305: After receiving the waveform assistance message from the terminal, the network device sends a downlink control message to the terminal, where the downlink control message indicates a BWP used by the terminal to send uplink data. In an example, the waveform that is expected to be used for the PUSCH and that is reported by the terminal is the DFT-s-OFDM waveform, and a BWP that is used by the terminal to send uplink data and that is indicated by the downlink control message is a BWP 2. There is a correspondence between the BWP 2 and the DFT-s-OFDM waveform.

1306: The terminal receives the downlink control message, and determines, based on the BWP indicated by the downlink control message, that the waveform to be used for the PUSCH is, for example, the DFT-s-OFDM waveform. For example, the terminal determines, based on the configuration information, that a waveform corresponding to the BWP 2 is the DFT-s-OFDM waveform, and the terminal determines that the waveform to be used for the PUSCH is the DFT-s-OFDM waveform. For details, refer to 906. Details are not described herein again.

1307: The terminal sends uplink information by using the waveform that is to be used for the PUSCH and that corresponds to the BWP indicated by the downlink control message. For details, refer to 907. Details are not described herein again.

The foregoing embodiments may be used separately, or may be used in combination to implement different technical effects.

In the foregoing embodiments provided in this application, the communication method provided in embodiments of this application is described from a perspective in which the terminal and the network device are used as execution bodies. To implement functions in the communication method provided in embodiments of this application, the terminal may include a hardware structure and/or a software module, and implement the functions in a form of the hardware structure, the software module, or a combination of the hardware structure and the software module. The network device may include a hardware structure and/or a software module, and implement the foregoing functions in a form of a hardware structure, a software module, or a combination of a hardware structure and a software module. Whether a function in the foregoing functions is performed by using the hardware structure, the software module, or the combination of the hardware structure and the software module depends on a specific application and a design constraint condition of the technical solutions.

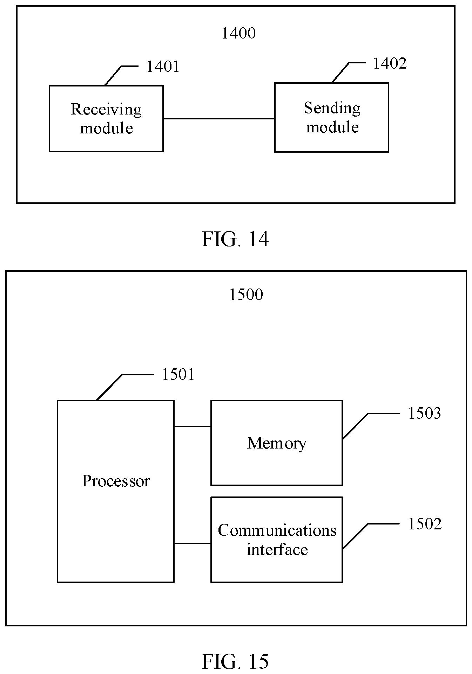

Same as the foregoing concept, as shown in FIG. 14, an embodiment of this application further provides an apparatus 1400. The apparatus 1400 includes a receiving module 1401 and a sending module 1402.

In a scenario, the apparatus 1400 is applied to a terminal. The receiving module 1401 is configured to receive a first message from a network device. The first message is used to indicate to use a first waveform for a physical uplink shared channel (PUSCH) of the terminal. Then, the sending module 1402 sends a capability information message of the terminal to the network device when a preset condition is met. The capability information message of the terminal includes maximum transmit power reduction (MPR) information of the terminal and capability information of the terminal. Further, the receiving module 1401 receives a second message from the network device. The second message is used to indicate to use a second waveform for a PUSCH of the terminal, and the second waveform is determined, based on the MPR information and a part of capabilities indicated by the capability information of the terminal, from a waveform supported by the physical uplink shared channel (PUSCH) of the terminal. The sending module 1402 sends uplink information to the network device by using the second waveform. Uplink transmit power used when the terminal sends the uplink information by using the second waveform is greater than uplink transmit power used when the terminal sends the uplink information by using the first waveform.

In another scenario, the apparatus is applied to a network device. The sending module 1402 is configured to send a first message to a terminal in a random access process. The first message is used to indicate to use a first waveform for a physical uplink shared channel (PUSCH) of the terminal. The receiving module 1401 is configured to receive a capability information message from the terminal. The capability information message includes maximum transmit power reduction (MPR) information of the terminal and capability information of the terminal. The sending module 1402 is further configured to send a first message to the terminal. The first message is used to indicate that a waveform to be used for a PUSCH of the terminal is a second waveform, and the second waveform is determined based on the MPR information and/or a part of capabilities indicated by the capability information of the terminal.

In another scenario, the apparatus is applied to a terminal. The receiving module 1401 is configured to receive a first message from a network device. The first message is used to indicate to use a first waveform for a physical uplink shared channel (PUSCH) of the terminal. The sending module 1402 sends a waveform assistance message to the network device. The waveform assistance message is used to indicate that a second waveform is expected to be used for a physical uplink shared channel (PUSCH) of the terminal. The receiving module 1401 is further configured to receive a second message from the network device. The second message is used to indicate to use the second waveform for a PUSCH of the terminal. The sending module 1402 is further configured to send uplink information to the network device by using the second waveform. Uplink transmit power used when the terminal sends the uplink information by using the second waveform is greater than uplink transmit power used when the terminal sends the uplink information by using the first waveform.

In still another scenario, the apparatus is applied to a network device. The sending module 1402 is configured to send a first message to a terminal in a random access process. The first message is used to indicate to use a first waveform for a physical uplink shared channel (PUSCH) of the terminal. The receiving module 1401 is configured to receive a waveform assistance message from the terminal. The waveform assistance message indicates that a second waveform is expected to be used for a PUSCH of the terminal. The sending module 1402 is further configured to send a second message to the terminal. The second message is used to indicate to use the second waveform for the PUSCH.

For specific execution processes of the receiving module 1401 and the sending module 1402, refer to the descriptions in the foregoing method embodiment. Division into the modules in embodiments of this application is an example, and is merely division into logical functions. During actual implementation, there may be another division manner. In addition, function modules in embodiments of this application may be integrated into one processor, or each of the modules may exist alone physically, or two or more modules may be integrated into one module. The integrated module may be implemented in a form of hardware, or may be implemented in a form of a software function module.

Same as the foregoing concept, as shown in FIG. 15, an embodiment of this application further provides an apparatus 1500. The apparatus 1500 may include at least one processor 1501 and a communications interface 1502. In some embodiments, the communications interface 1502 is configured to communicate with another device by using a transmission medium, so that an apparatus in the apparatus 1500 may communicate with the another device. For example, the communications interface 1502 may be a transceiver, a circuit, a bus, a module, or a communications interface of another type. The another device may be another terminal or another network device. The processor 1501 receives and sends a message through the communications interface 1502, and is configured to implement the method implemented by the terminal or the network device in the foregoing embodiments.

In a scenario, the apparatus 1500 is configured to implement functions of the terminal in the foregoing method. The apparatus may be a terminal, or may be a chip or a chip system in a terminal. The at least one processor 1501 is configured to implement functions of the terminal in the foregoing method in combination with the communications interface 1502.

In an example, the communications interface 1502 is configured to receive a first message from a network device. The first message is used to indicate to use a first waveform for a physical uplink shared channel (PUSCH) of the terminal. The processor 1501 is configured to: when determining that a preset condition is met, control the communications interface 1502 to send a capability information message of the terminal to the network device. The capability information message of the terminal includes maximum transmit power reduction (MPR) information of the terminal and capability information of the terminal. The communications interface 1502 is further configured to receive a second message from the network device. The second message is used to indicate to use a second waveform for a PUSCH of the terminal, and the second waveform is determined, based on the MPR information and a part of capabilities indicated by the capability information of the terminal, from a waveform supported by the physical uplink shared channel (PUSCH) of the terminal. The processor 1501 is further configured to control the communications interface 1502 to send uplink information to the network device by using the second waveform. For details, refer to detailed descriptions in the method. Details are not described herein again.

In another example, the communications interface 1502 is configured to receive a first message from a network device. The first message is used to indicate to use a first waveform for a physical uplink shared channel (PUSCH) of the terminal. The processor 1501 is configured to control the communications interface 1502 to send a waveform assistance message to the network device. The waveform assistance message is used to indicate that a second waveform is expected to be used for a physical uplink shared channel (PUSCH) of the terminal. The communications interface 1502 is further configured to receive a second message from the network device. The second message is used to indicate to use the second waveform for a PUSCH of the terminal. The processor 1501 is further configured to control the communications interface 1502 to send uplink information to the network device by using the second waveform.

In another scenario, the apparatus 1500 is configured to implement a function of the network device in the foregoing method. The apparatus may be a network device, or may be a chip or a chip system in a network device. The at least one processor 1501 is configured to implement functions of the network device in the foregoing method in combination with the communications interface 1502.

In an example, the processor 1501 is configured to control the communications interface 1502 to send a first message to a terminal in a random access process. The first message is used to indicate to use a first waveform for a physical uplink shared channel (PUSCH) of the terminal. The communications interface 1502 is further configured to receive a capability information message from the terminal. The capability information message includes maximum transmit power reduction (MPR) information of the terminal and capability information of the terminal. The processor 1501 is further configured to control the communications interface 1502 to send a first message to the terminal. The first message is used to indicate that a waveform to be used for a PUSCH of the terminal is a second waveform, and the second waveform is determined based on the MPR information and/or a part of capabilities indicated by the capability information of the terminal.

In another example, the processor 1501 is configured to control the communications interface 1502 to send a first message to a terminal in a random access process. The first message is used to indicate to use a first waveform for a physical uplink shared channel (PUSCH) of the terminal. The communications interface 1502 is further configured to receive a waveform assistance message from the terminal. The waveform assistance message indicates that a second waveform is expected to be used for a PUSCH of the terminal. The processor 1501 is further configured to control the communications interface 1502 to send a second message to the terminal. The second message is used to indicate to use the second waveform for the PUSCH.

In some embodiments, the apparatus 1500 may further include at least one memory 1503, configured to store a computer program. The memory 1503 is coupled to the processor 1501. Couplings in this embodiment of this application are indirect couplings or communication connections between apparatuses, units, or modules, may be implemented in an electrical form, a mechanical form, or another form, and are used for information exchange between the apparatuses, the units, or the modules. In another implementation, the memory 1503 may alternatively be located outside the apparatus 1500. The processor 1501 may operate in collaboration with the memory 1503. The processor 1501 may execute the computer program stored in the memory 1503. At least one of the at least one memory may be included in the processor.

In this embodiment of this application, a connection medium between the communications interface 1502, the processor 1501, and the memory 1503 is not limited. For example, in this embodiment of this application, the memory 1503, the processor 1501, and the communications interface 1502 may be connected through a bus in FIG. 15. The bus may be classified into an address bus, a data bus, a control bus, or the like.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a nonvolatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction structure or a data structure and that can be accessed by a computer, but is not limited thereto. The memory in embodiments of this application may alternatively be a circuit or any other apparatus that can implement a storage function, and is configured to store program instructions and/or data.

All or a part of the methods in embodiments of this application may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clearly that, a person skilled in the art can make various modifications and variations to this application without departing from the scope of this application. This application is intended to cover these modifications and variations of this application provided that they fall within the scope of the claims of this application and their equivalent technologies.

**Claims**

1. A communications system, comprising:

   a network device, configured to send a first message to a terminal in a random access process, wherein the first message is used to indicate to use a first waveform for a physical uplink shared channel (PUSCH) of the terminal; and

the terminal, configured to send a third message to the network device when a preset condition is met, wherein the third message comprises maximum transmit power reduction (MPR) information of the terminal and capability information of the terminal, wherein

the network device is further configured to: receive the second message, and send a second message to the terminal, wherein the second message is used to indicate to use a second waveform for a PUSCH of the terminal; and

the second waveform is determined based on the MPR information of the terminal and/or a part of capabilities indicated by the capability information of the terminal, and uplink transmit power used when the terminal sends uplink information by using the second waveform is greater than uplink transmit power used when the terminal sends uplink information by using the first waveform.

2. A communications system, comprising:

a network device, configured to send a first message to a terminal in a random access process, wherein the first message is used to indicate to use a first waveform for a physical uplink shared channel (PUSCH) of the terminal; and

the terminal, configured to send a waveform assistance message to the network device, wherein the waveform assistance message indicates that a second waveform is expected to be used for a PUSCH of the terminal, wherein

the network device is further configured to: receive the waveform assistance message from the network device, and send a second message to the terminal, wherein the second message is used to indicate to use the second waveform for the PUSCH; and

the terminal is further configured to: receive the second message from the network device, and send uplink information to the network device by using the second waveform indicated by the second message.

3. A waveform indication method, comprising:

receiving, by a terminal, a first message from a network device, wherein the first message is used to indicate to use a first waveform for a physical uplink shared channel (PUSCH) of the terminal;

sending, by the terminal, a third message to the network device when a preset condition is met, wherein the third message comprises maximum transmit power reduction (MPR) information of the terminal and capability information of the terminal;

receiving, by the terminal, a second message from the network device, wherein the second message is used to indicate to use a second waveform for a PUSCH of the terminal, and the second waveform is determined, based on the MPR information and a part of capabilities indicated by the capability information of the terminal, from a waveform supported by the physical uplink shared channel (PUSCH) of the terminal; and

sending, by the terminal, uplink information to the network device by using the second waveform.

4. The method according to claim 3, wherein the second message is a downlink control message, the downlink control message indicates that a first bandwidth part (BWP) is used for the PUSCH, and a correspondence between the first BWP and the second waveform exists.

5. The method according to claim 4, further comprising:

receiving, by the terminal, configuration information sent by the network device, wherein the configuration information is used to configure a correspondence between a waveform supported by a PUSCH of the terminal and a BWP, different waveforms correspond to different BWPs, and the configuration information comprises the correspondence between the first BWP and the second waveform.

6. The method according to any one of claims 3 to 5, wherein the MPR information comprises a correspondence between different modulation schemes, different resource block (RB) locations, two waveforms supported by a PUSCH of the terminal, and different MPR values; or

the MPR information comprises a plurality of difference values, the difference value is a difference between MPR values that correspond to two waveforms supported by a PUSCH of the terminal and that are in a same modulation scheme at a same RB location, and different difference values correspond to different modulation schemes or RB locations; or

the MPR information comprises a difference between MPR values that correspond to two waveforms supported by a PUSCH of the terminal and that are at an inner RB location; or

the MPR information comprises a difference between MPR values that correspond to two waveforms supported by a PUSCH of the terminal and that are in a QPSK modulation scheme.

7. The method according to claim 6, wherein the two waveforms supported by the PUSCH of the terminal comprise a cyclic prefix orthogonal frequency division multiplexing (CP-OFDM) waveform and a discrete Fourier transform-spread-orthogonal frequency division multiplexing (DFT-s-OFDM) waveform.

8. The method according to any one of claims 3 to 7, wherein that a preset condition is met comprises:

the terminal receives a capability enquiry request from the network device, wherein the capability enquiry request is used to request to enquire a capability of the terminal; or

a trigger condition for triggering sending of a capability information message of the terminal to the network device is met.

9. The method according to any one of claims 3 to 8, wherein the second waveform is a DFT-s-OFDM waveform, and the method further comprises:
receiving, by the terminal, a first parameter from the network device, wherein the first parameter comprises one or more of a sounding reference signal (SRS) resource, an SRS port, or a maximum antenna rank.

10. The method according to any one of claims 3 to 9, wherein the third message is the capability information message of the terminal.

11. A waveform indication method, comprising:

receiving, by a terminal, a first message from a network device, wherein the first message is used to indicate to use a first waveform for a physical uplink shared channel (PUSCH) of the terminal;

sending, by the terminal, a waveform assistance message to the network device, wherein the waveform assistance message is used to indicate that a second waveform is expected to be used for a physical uplink shared channel (PUSCH) of the terminal;

receiving, by the terminal, a second message from the network device, wherein the second message is used to indicate to use the second waveform for a PUSCH of the terminal; and

sending, by the terminal, uplink information to the network device by using the second waveform.

12. The method according to claim 11, wherein the second message is a downlink control message, the downlink control message indicates that a first bandwidth part (BWP) is used for the PUSCH, and a correspondence between the first BWP and the second waveform exists.

13. The method according to claim 12, further comprising:
receiving, by the terminal, configuration information sent by the network device, wherein the configuration information is used to configure a correspondence between a waveform supported by a PUSCH of the terminal and a BWP, different waveforms correspond to different BWPs, and the configuration information comprises the correspondence between the first BWP and the second waveform.

14. The method according to claim 13, wherein the waveform supported by the PUSCH comprises a cyclic prefix orthogonal frequency division multiplexing (CP-OFDM) waveform or a discrete Fourier transform-spread-orthogonal frequency division multiplexing (DFT-s-OFDM) waveform.

15. The method according to any one of claims 11 to 14, wherein the second waveform is a DFT-s-OFDM waveform, and the method further comprises:
receiving, by the terminal, a first parameter from the network device, wherein the first parameter comprises one or more of a sounding reference signal (SRS) resource, an SRS port, or a maximum antenna rank.

16. A waveform indication method, comprising:

sending, by a network device, a first message to a terminal in a random access process, wherein the first message is used to indicate to use a first waveform for a physical uplink shared channel (PUSCH) of the terminal;

receiving, by the network device, a third message from the terminal, wherein the third message comprises maximum transmit power reduction (MPR) information of the terminal and capability information of the terminal; and

sending, by the network device, a second message to the terminal, wherein the second message is used to indicate that a waveform to be used for a PUSCH of the terminal is a second waveform, and the second waveform is determined based on the MPR information and/or a part of capabilities indicated by the capability information of the terminal.

17. A waveform indication method, comprising:

sending, by a network device, a first message to a terminal in a random access process, wherein the first message is used to indicate to use a first waveform for a physical uplink shared channel (PUSCH) of the terminal; receiving, by the network device, a waveform assistance message from the terminal, wherein the waveform assistance message indicates that a second waveform is expected to be used for a PUSCH of the terminal; and sending, by the network device, a second message to the terminal, wherein the second message is used to indicate to use the second waveform for the PUSCH.

18. A chip, comprising a processor and a communications interface, wherein

the communications interface is configured to receive a first message from a network device, wherein the first message is used to indicate to use a first waveform for a physical uplink shared channel (PUSCH) of a terminal; the processor is configured to: when determining that a preset condition is met, control the communications interface to send a third message to the network device, wherein the third message comprises maximum transmit power reduction (MPR) information of the terminal and capability information of the terminal; the communications interface is further configured to receive a second message from the network device, wherein the second message is used to indicate to use a second waveform for a PUSCH of the terminal, and the second waveform is determined, based on the MPR information and a part of capabilities indicated by the capability information of the terminal, from a waveform supported by the physical uplink shared channel (PUSCH) of the terminal; and the processor is further configured to control the communications interface to send uplink information to the network device by using the second waveform.

19. The chip according to claim 18, wherein the second message is a downlink control message, the downlink control message indicates that a first bandwidth part (BWP) is used for the PUSCH, and a correspondence between the first BWP and the second waveform exists.

20. The chip according to claim 19, wherein the communications interface is further configured to receive configuration information sent by the network device, wherein the configuration information is used to configure a correspondence between a waveform supported by a PUSCH of the terminal and a BWP, different waveforms correspond to different BWPs, and the configuration information comprises the correspondence between the first BWP and the second waveform.

21. The chip according to any one of claims 18 to 20, wherein the MPR information comprises a correspondence between different modulation schemes, different resource block (RB) locations, two waveforms supported by a PUSCH of the terminal, and different MPR values; or

the MPR information comprises a plurality of difference values, the difference value is a difference between MPR values that correspond to two waveforms supported by a PUSCH of the terminal and that are in a same modulation scheme at a same RB location, and different difference values correspond to different modulation schemes or RB locations; or the MPR information comprises a difference between MPR values that correspond to two waveforms supported by a PUSCH of the terminal and that are at an inner RB location; or the MPR information comprises a difference between MPR values that correspond to two waveforms supported by a PUSCH of the terminal and that are in a QPSK modulation scheme.

22. The chip according to claim 21, wherein the two waveforms supported by the PUSCH of the terminal comprise a cyclic prefix orthogonal frequency division multiplexing (CP-OFDM) waveform and a discrete Fourier transform-spread-orthogonal frequency division multiplexing (DFT-s-OFDM) waveform.

23. The chip according to any one of claims 18 to 22, wherein that a preset condition is met comprises:

the communications interface receives a capability enquiry request from the network device, wherein the capability enquiry request is used to request to enquire a capability of the terminal; or
the processor determines that a trigger condition for triggering sending of a capability information message of the terminal to the network device is met.

24. The chip according to any one of claims 18 to 23, wherein the second waveform is a DFT-s-OFDM waveform, and the communications interface is further configured to receive a first parameter from the network device, wherein the first parameter comprises one or more of a sounding reference signal (SRS) resource, an SRS port, or a maximum antenna rank.

25. The chip according to any one of claims 18 to 24, wherein the third message is the capability information message of the terminal.

26. A chip, comprising a communications interface and a processor, wherein

the communications interface is configured to receive a first message from a network device, wherein the first message is used to indicate to use a first waveform for a physical uplink shared channel (PUSCH) of a terminal;
the processor is configured to control the communications interface to send a waveform assistance message to the network device, wherein the waveform assistance message is used to indicate that a second waveform is expected to be used for a physical uplink shared channel (PUSCH) of the terminal;
the communications interface is further configured to receive a second message from the network device, wherein the second message is used to indicate to use the second waveform for a PUSCH of the terminal; and
the processor is further configured to control the communications interface to send uplink information to the network device by using the second waveform.

27. The chip according to claim 26, wherein the second message is a downlink control message, the downlink message indicates that a first bandwidth part (BWP) is used for the PUSCH, and a correspondence between the first BWP and the second waveform exists.

28. The chip according to claim 26, wherein the communications interface is further configured to receive configuration information sent by the network device, wherein the configuration information is used to configure a correspondence between a waveform supported by a PUSCH of the terminal and a BWP, different waveforms correspond to different BWPs, and the configuration information comprises the correspondence between the first BWP and the second waveform.

29. The chip according to claim 27, wherein the waveform supported by the PUSCH comprises a cyclic prefix orthogonal frequency division multiplexing (CP-OFDM) waveform or a discrete Fourier transform-spread-orthogonal frequency division multiplexing (DFT-s-OFDM) waveform.

30. The chip according to any one of claims 26 to 29, wherein the second waveform is a DFT-s-OFDM waveform, and the communications interface is further configured to receive a first parameter from the network device, wherein the first parameter comprises one or more of a sounding reference signal (SRS) resource, an SRS port, or a maximum antenna rank.

31. A chip, comprising a communications interface and a processor, wherein

the processor is configured to control the communications interface to send a first message to a terminal in a random access process, wherein the first message is used to indicate to use a first waveform for a physical uplink shared channel (PUSCH) of the terminal;
the communications interface is configured to receive a third message, wherein the third message comprises maximum transmit power reduction (MPR) information of the terminal and capability information of the terminal; and
the processor is further configured to control the communications interface to send a second message to the terminal, wherein the second message is used to indicate that a waveform to be used for a PUSCH of the terminal is a second waveform, and the second waveform is determined based on the MPR information and/or a part of capabilities indicated by the capability information of the terminal.

32. A chip, comprising a communications interface and a processor, wherein

the processor is configured to control the communications interface to send a first message to a terminal in a random access process, wherein the first message is used to indicate to use a first waveform for a physical uplink shared channel (PUSCH) of the terminal;
the communications interface is configured to receive a waveform assistance message from the terminal, wherein the waveform assistance message indicates that a second waveform is expected to be used for a PUSCH of the terminal; and
the processor is further configured to control the communications interface to send a second message to the terminal, wherein the second message is used to indicate to use the second waveform for the PUSCH.

33. A computer-readable storage medium, storing a computer program, wherein when the computer program is executed by a computer, the computer is enabled to perform the method according to any one of claims 3 to 10, or perform the method according to any one of claims 11 to 15, or perform the method according to claim 16, or perform the method according to claim 17.

FIG. 1

FIG. 2

FIG. 3

LTE_P_Max=20 dBm

NR_P_Max=20 dBm

FIG. 4

LTE standard

NR standard

23 dBm

FIG. 5

LTE standard

NR standard

FIG. 6

Network device

Terminal

FIG. 7

Terminal

Network device

UE capability enquiry (UE Capability enquiry)

801: UE capability information (UE Capability Information) message (MPR information)

802: Determine, based on the MPR information reported by the terminal and a power impact parameter, a waveform to be used for a PUSCH

803: RRC connection reconfiguration (RRC Connection Reconfiguration) message (indicating the waveform to be used for the PUSCH)

804: Uplink information (using the waveform that is to be used for the PUSCH and that is indicated by the RRC connection reconfiguration message)

FIG. 8

FIG. 9

Terminal | Network device

Set a correspondence between a plurality of different BWPs and different waveforms

1001: Random access request

1002: Random access response (indicating that a waveform to be used for a PUSCH is a CP-OFDM waveform)

1003: UE capability enquiry (UE Capability enquiry)

1004: UE capability information (UE Capability Information) message (MPR information)

1005: Determine, based on the MPR information reported by the terminal and a power impact parameter, a waveform to be used for a PUSCH (DFT-s-OFDM waveform)

1006: Downlink control message (indicating, by indicating a BWP, that the waveform to be used for the PUSCH is the DFT-s-OFDM waveform)

1007: Uplink information (using the waveform that is to be used for the PUSCH and that corresponds to the BWP indicated by the downlink control message)

FIG. 10

```
┌──────────┐                                              ┌──────────┐
│          │                                              │ Network  │
│ Terminal │                                              │ device   │
│          │                                              │          │
└────┬─────┘                                              └────┬─────┘
     │                                                         │
     │    1101: Waveform assistance message (indicating a      │
     │       waveform expected to be used for a PUSCH)         │
     ├────────────────────────────────────────────────────────>
     │                                                         │
     │    1102: RRC connection reconfiguration (RRC            │
     │         Connection Reconfiguration) message            │
     │    (indicating a waveform to be used for a PUSCH)      │
     <────────────────────────────────────────────────────────┤
     │                                                         │
     │  1103: Uplink information (using the waveform that      │
     │   is to be used for the PUSCH and that is indicated     │
     │   by the RRC connection reconfiguration message)       │
     ├────────────────────────────────────────────────────────>
     │                                                         │
     │                                                         │
```

FIG. 11

FIG. 12

| Terminal | | Network device |
|---|---|---|

Set a correspondence between a plurality of different BWPs and different waveforms

1301: Random access request

1302: Random access response (indicating that a waveform to be used for a PUSCH is a CP-OFDM waveform)

Configuration information (including BWPs that correspond to different waveforms and that are configured for the terminal)

1303: Trigger to determine that switching needs to be performed on a waveform to be used for a PUSCH

1304: Waveform assistance message (indicating that a waveform expected to be used for a PUSCH is a DFT-s-OFDM waveform)

1305: Downlink control message (indicating, by indicating a BWP, that a waveform to be used for a PUSCH is the DFT-s-OFDM waveform)

1306: Determine, based on the BWP indicated by the downlink control message, that the waveform to be used for the PUSCH is the DFT-s-OFDM waveform

1307: Uplink information (using the waveform, namely, the DFT-s-OFDM waveform, that is to be used for the PUSCH and that corresponds to the BWP indicated by the downlink control message)

FIG. 13

1400

1401

Receiving
module

1402

Sending
module

FIG. 14

1500

1501

Processor

1503

Memory

1502

Communications
interface

FIG. 15

<table>
<tr><td colspan="2">INTERNATIONAL SEARCH REPC</td><td colspan="2">International application No.<br>**PCT/CN2021/110645**</td></tr>
</table>

**A. CLASSIFICATION OF SUBJECT MATTER**

H04W 36/00(2009.01)i

According to International Patent Classification (IPC) or to both national classification and IPC

**B. FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT; CNKI; WPI; EPODOC; 3GPP: 波形, CP-OFDM, CP OFDM, DFT-s-OFDM, DFT s OFDM, MPR, 最大发射功率回退, 最大功率回退, 最大功率降低, 能力, 带宽部分, BWP, 随机接入, RACH, 消息2, MSG2, RAR, 物理上行共享信道, 物理上行链路共享信道, PUSCH, 功率, 请求, 期望, 希望, 支持, RRC, 重配置, 切换, waveform?, Maximum Output Power reduction, Maximum Power reduction, capability, RA, random access, message2, power, request, support+, RRC connection reconfiguration, RRCconnectionreconfiguration, UE, PUSCH-CONFIG, switch+

**C. DOCUMENTS CONSIDERED TO BE RELEVANT**

| Category* | Citation of document, with indication, where appropriate, of the relevant passages | Relevant to claim No. |
|---|---|---|
| X | WO 2020167178 A1 (TELEFONAKTIEBOLAGET LM ERICSSON (PUBL)) 20 August 2020 (2020-08-20)<br>    description, lines 64-84, 111-112, 220-222, 276-291, 388-390 | 1, 3-10, 16, 18-25, 31, 33 |
| Y | WO 2020167178 A1 (TELEFONAKTIEBOLAGET LM ERICSSON (PUBL)) 20 August 2020 (2020-08-20)<br>    description, lines 64-84, 111-112, 220-222, 276-291, 388-390 | 2, 11-15, 17, 26-30, 32 |
| Y | US 2019261315 A1 (QUALCOMM INC.) 22 August 2019 (2019-08-22)<br>    description paragraphs [0123]-[0124] | 2, 11-15, 17, 26-30, 32 |
| Y | CN 108271214 A (HUAWEI TECHNOLOGIES CO., LTD.) 10 July 2018 (2018-07-10)<br>    description, paragraphs [0068]-[0099], and figures 2-4 | 1-33 |
| Y | CATT. "Further Details on NR 4-step RA Procedure"<br>*3GPP TSG RAN WG1 Meeting #88 R1-1702066*, 17 February 2017 (2017-02-17),<br>    section 3 | 1-33 |

☑ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 October 2021** | **26 October 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPC**

| International application No. |
| --- |
| **PCT/CN2021/110645** |

**C.     DOCUMENTS CONSIDERED TO BE RELEVANT**

| Category* | Citation of document, with indication, where appropriate, of the relevant passages | Relevant to claim No. |
| --- | --- | --- |
| Y | LG ELECTRONICS. "Discussion on UL power control for NR"<br>*3GPP TSG RAN WG1 Meeting NR#3 R1-1715902*, 21 September 2017 (2017-09-21),<br>    section 4 | 1-33 |
| Y | US 2019274158 A1 (GUANGDONG OPPO MOBILE TELECOMMUNICATIONS CORP.,<br>LTD.) 05 September 2019 (2019-09-05)<br>    description, paragraphs [0063]-[0065] | 2, 11-15, 17, 26-30, 32 |
| A | US 2020267660 A1 (SHARP KABUSHIKI KAISHA et al.) 20 August 2020 (2020-08-20)<br>    entire document | 1-33 |
| A | US 2019261284 A1 (NTT DOCOMO, INC.) 22 August 2019 (2019-08-22)<br>    entire document | 1-33 |

Form PCT/ISA/210 (second sheet) (January 2015)

**INTERNATIONAL SEARCH REPORT**
Information on patent family members

International application No.

**PCT/CN2021/110645**

| Patent document cited in search report | | | Publication date (day/month/year) | Patent family member(s) | | | Publication date (day/month/year) |
|---|---|---|---|---|---|---|---|
| WO | 2020167178 | A1 | 20 August 2020 | None | | | |
| US | 2019261315 | A1 | 22 August 2019 | WO | 2019165028 | A1 | 29 August 2019 |
| | | | | EP | 3756403 | A1 | 30 December 2020 |
| | | | | CN | 111758291 | A | 09 October 2020 |
| CN | 108271214 | A | 10 July 2018 | EP | 3567904 | A1 | 13 November 2019 |
| | | | | WO | 2018126972 | A1 | 12 July 2018 |
| | | | | BR | 112019013825 | A2 | 28 January 2020 |
| | | | | CN | 109246754 | A | 18 January 2019 |
| | | | | CN | 112714470 | A | 27 April 2021 |
| | | | | US | 2019373644 | A1 | 05 December 2019 |
| | | | | CA | 3049291 | A1 | 12 July 2018 |
| | | | | CN | 110140373 | A | 16 August 2019 |
| | | | | JP | 2020509717 | A | 26 March 2020 |
| | | | | CN | 112714471 | A | 27 April 2021 |
| US | 2019274158 | A1 | 05 September 2019 | JP | 2019536326 | A | 12 December 2019 |
| | | | | CN | 109891785 | A | 14 June 2019 |
| | | | | EP | 3531592 | A1 | 28 August 2019 |
| | | | | WO | 2018081954 | A1 | 11 May 2018 |
| | | | | KR | 20190074297 | A | 27 June 2019 |
| US | 2020267660 | A1 | 20 August 2020 | EP | 3681209 | A1 | 15 July 2020 |
| | | | | CN | 111095998 | A | 01 May 2020 |
| | | | | KR | 20200044900 | A | 29 April 2020 |
| | | | | WO | 2019050031 | A1 | 14 March 2019 |
| | | | | JP | 2019050471 | A | 28 March 2019 |
| US | 2019261284 | A1 | 22 August 2019 | WO | 2018083862 | A1 | 11 May 2018 |
| | | | | CN | 109891954 | A | 14 June 2019 |
| | | | | JP | 2020017774 | A | 30 January 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010889550